# EUROPEAN PATENT APPLICATION

(11) **EP 2 638 970 A1**
(43) Date of publication of application: **18.09.2013**
(21) Application number: 13159250.3
(22) Date of filing: 14.03.2013
(51) Int. Cl.: B05B 1/16, E03C 1/04, F16K 11/16, B05B 1/18

(54) **Water passage switching device and hand shower head comprising the water passage switching device**

(30) Priority: 16.03.2012 JP 2012059844; 24.08.2012 JP 2012185682
(71) Applicant: Toto Ltd., Kitakyushu-shi, Fukuoka 802-8601 (JP)
(72) Inventor: Aihara, Yutaka, Kitakyushu-shi, Fukuoka 802-8601 (JP); Miura, Tsuyoshi, Kitakyushu-shi, Fukuoka 802-8601 (JP); Ishiyama, Sho, Kitakyushu-shi, Fukuoka 802-8601 (JP); Kudo, Tomohiro, Kitakyushu-shi, Fukuoka 802-8601 (JP); Matsui, Hideyuki, Kitakyushu-shi, Fukuoka 802-8601 (JP); Kazaoka, Daisuke, Kitakyushu-shi, Fukuoka 802-8601 (JP); Uemura, Yasufumi, Kitakyushu-shi, Fukuoka 802-8601 (JP); Tanabe, Masaya, Kitakyushu-shi, Fukuoka 802-8601 (JP)
(74) Representative: Takeuchi, Maya

(57) **Abstract**

Provided is a water passage switching device capable of opening and closing valves by a very easy operation. The water passage switching device (10; 122) of the present invention capable of switching between at least three water spouting and stopping modes by opening and closing valves including: valve elements (26a, 26b, 26C; 142) configured to be moved between a valve-open position and a valve-closed position in response to the each water spouting and stopping mode; a pivotally movable tilting operation member (6; 112) directly operated by a user to switch between the each water spouting and stopping mode; and valve actuating rods (40a, 40b, 40c; 148) arranged around a pivot point of the tilting operation member, and each adapted to open and close a respective one of the plurality of valve elements based on a tilting movement in each direction of the tilting operation member.

## Description

### TECHNICAL FIELD

The present invention relates to a water passage switching device, and in particular to a water passage switching device capable of switching between at least three water spouting and stopping modes by opening and closing a plurality of valves, and to a hand shower head comprising the water passage switching device.

### BACKGROUND ART

In recent years, a hand shower head which can be used by switching a plurality of water spouting modes has been developed. In such a hand shower head, the water spouting patterns are changed by switching between internal water passages by operating valve elements housed in a shower head body.

JP 2002-165719A (Patent Document 1) describes a shower head. This shower head is equipped with a seesaw switch-like button at the leading end thereof for switching the water spouting patterns, and through the operation of this button, a valve port is opened and closed by a flow path switching mechanism housed in a water spray portion of the shower head to switch the water spouting patterns.

JP 2003-530175A (Patent Document 2) describes a multiway valve for a plumbing joint. This multiway valve has an equilateral-triangular built-in tiltable member (17) to which a closure member (13) is attached at each vertex. When a user pushes each raised portion (10) of an elastic diaphragm (9) which is disposed to cover the tiltable member (17), each push-button (7, 8) provided on the back side of each raised portion (10) pushes a lateral side of the tiltable member (17). This causes the tiltable member (17) to be tilted, which pulls up the closure member (13) attached to the opposite side of the pushed lateral side of the tiltable member (17) to open a valve.

### LIST OF PRIOR ART DOCUMENTS

### [PATENT DOCUMENTS]

Patent Document 1: JP 2002-165719A
Patent Document 2: JP 2003-530175A

### SUMMARY OF THE INVENTION

### [OBJECT TO BE ACCOMPLISHED BY THE INVENTION]

However, the shower head described in JP 2002-165719A has a problem with its poor operability in that it is necessary to operate the button with the hand which is not holding the shower head in switching the water spouting patterns because the button for switching the water spouting patterns is provided at the leading end of the shower head. Specifically, if the operation portion for switching the water spouting patterns was disposed near the gripper portion of the shower head, the user could switch the water spouting patterns with his/her finger of the hand which is holding the shower head while taking a shower, so that the operability would be improved.

On the other hand, the multiway valve described in JP 2003-530175A is provided near the gripper portion of the shower head. This makes it possible to operate each push-button with user's finger of the hand which is holding the shower head. However, the multiway valve described in JP 2003-530175A has a problem that it does not provide sufficiently good operation feeling because it requires to push each raised portion (10) provided on the elastic diaphragm (9) depending on a desired water spouting pattern. In particular, when the multiway valve is applied to a hand shower head, it usually involves an operation with user's wet finger in a bathroom, so that slight difference in the operability provides large effect on the user's operation feeling.

It is therefore an object of the present invention to provide a water passage switching device capable of opening and closing a plurality of valves with a very easy operation, and a hand shower head comprising the water passage switching device.

### [MEANS TO ACCOMPLISH THE OBJECT]

In order to accomplish the above object, the present invention provides a water passage switching device capable of switching between at least three water spouting and stopping modes by opening and closing a plurality of valves, comprising: a plurality of valve elements configured to be moved between a valve-open position and a valve-closed position in response to the each water spouting and stopping mode; a pivotally movable tilting operation member directly operated by a user to switch between the each water spouting and stopping mode; and a plurality of valve actuating rods arranged around a pivot point of the tilting operation member, and each adapted to open and close a respective one of the plurality of valve elements based on a tilting movement in each direction of the tilting operation member.

In the above water passage switching device of the present invention, the tilting operation member is pivotally moved by a user operation, and based on the tilting movement of the tilting operation member in each direction, each of the plurality of valve actuating rods opens and closes a respective one of the plurality of valve elements. By each valve element, when these valve elements are moved between a valve-open position and a valve-closed position, at least three water spouting and stopping modes are switched to each other.

Thus, at least three water spouting and stopping modes are directly switched to each other by tilting operation of a single tilting operation member in each direction. This makes it possible to improve the operability of the water passage switching device. Further, the water spouting and stopping modes are switched by the tilting operation of the single tilting operation member. This makes it possible to ensure the user to switch to a desired water spouting and stopping mode only by roughly tilting the tilting operation member. This provides an excellent operability as compared to the case where separate operation button or the like is provided for each water spouting and stopping mode because the user is not required to target and push the operation button for a desired water spouting and stopping mode. For this reason, according to the present invention, even in the case of downsized tilting operation member, the operability is not significantly reduced. In addition, since the only one tilting operation member is exposed to the exterior, the water passage switching device with excellent appearance can be achieved.

Preferably, the water passage switching device of the present invention further comprises tilting movement holding means for, when the tilting operation member is tilted to switch to the each water spouting and stopping mode, holding the tilted tilting operation member at a tilted position.
Thus, the tilted tilting operation member is held in the tilted position. This makes it possible to allow a user to visually recognize the switched water spouting and stopping mode from the situation of the tilting operation member, and thus the operability can be improved.

Preferably, in the water passage switching device of the present invention, the tilting operation member comprises an operation portion to which operational force is applied by a user, and a tilting shaft extending from the operation portion to the pivot point.
Thus the operation portion and the pivot point is spaced apart by the tilting shaft, and thus the user can tilt the tilting operation member in each direction only by applying an approximately horizontal force to the operation portion with touching the tilting operation member, for example with his/her finger. This makes it possible to allow the user to tilt the tilting operation member in each direction with his/her fingertip touching on the operation portion, and to easily switch the water spouting and stopping modes with one finger.

Preferably, in the water passage switching device of the present invention, the valve elements are moved by movement of the valve actuating rod when the tilting operation member pushes one end of the valve actuating rod, and wherein a contact surface between the tilting operation member and the valve actuating rod is formed in a shape allowing line contact or surface contact therebetween.
In this water passage switching device, the tilting operation member pushes one end of the valve actuating rod through the line contact or the surface contact, and thus the tilting operation member is not likely to be worn even in the case of repetitive operation. This makes it possible to improve the durability of the water passage switching device.

Preferably, in the water passage switching device of the present invention, the valve elements are moved by movement of the valve actuating rod when the tilting operation member pushes one end of the valve actuating rod, and wherein a contact surface of the valve actuating rod in contact with the tilting operation member is formed in a curved surface.
Thus, the contact surface of the valve actuating rod contacting with the tilting operation member is formed in a curved surface. Accordingly, a contact point between the tilting operation member and the valve actuating rod varies with the tilting angle, and thus the tilting operation member is not likely to be worn even in the case of repetitive operation. This makes it possible to improve the durability of the water passage switching device.

Preferably, in the water passage switching device of the present invention, the one end of the valve actuating rod pushed by the tilting operation member is expanded in a direction radially-outwardly from the pivot point.

In the water passage switching device, the one end of the valve actuating rod is expanded in a direction radially-outwardly from the pivot point. This makes it is possible to establish the contact point between the tilting operation member and the valve actuating rod at a radially outward location from the center of the pivot point. This makes it possible to dispose the valve actuating rod in proximity to the pivot point, namely to dispose a plurality of valve elements in proximity, while setting an angle of gradient of the tilting operation member required to contact with the valve actuating rod to be small. Therefore, the water passage switching device can be downsized. In addition, this allows for larger movement of the valve actuating rod with respect to the angle of the tilting operation member to be inclined.

Preferably, the water passage switching device of the present invention further comprises a tilting movement lock member for locking a pivoting movement of the tilting operation member.
Thus, the water passage switching device comprises a tilting movement lock member for locking a pivoting movement of the tilting operation member. This makes it possible to prevent an unintended water spout at the time of cleaning or caused by children's mischief.

Preferably, the water passage switching device of the present invention further comprises a tilting movement restricting member for restricting directions to which the tilting operation member is tilted, and the tilting movement restricting member restricting the directions to a plurality of predetermined directions.
Thus, in this water passage switching device, tilting direction of the tilting operation member is restricted by the tilting movement restricting member. This makes it possible to prevent a plurality of water spouting and stopping modes from being selected at a time, and to reliably select one mode of the at least three water spouting and stopping modes.

Further, the present invention provides a hand shower head capable of switching between water spouting and stopping modes by opening and closing of valves, comprising: a shower head body equipped with a gripper portion and a water spray portion, the gripper portion being gripped by a user; a water spray plate provided with a plurality of water spray holes; and the water passage switching device according to the present invention including the tilting operation member disposed in the gripper part.

In this hand shower head of the present invention, even in the case of downsized tilting operation member for placement in the gripper portion of the shower head body, the operability for switching between at least three water spouting and stopping modes is not significantly reduced.

### [EFFECT OF THE INVENTION]

As above, the water passage switching device and a hand shower head comprising the water passage switching device of the present invention can open and close a plurality of valves with a very easy operation.

### BRIEF DESCRIPTION OF THE DRAWINGS

FIG. 1 is a perspective view illustrating an appearance of a hand shower head according to a first embodiment of the present invention.
FIG. 2 is a cross-sectional view of the hand shower head according to the first embodiment of the present invention.
FIG. 3 is a cross-sectional enlarged view of a water passage switching device housed in the hand shower head.
FIG. 4 is an exploded perspective view of the water passage switching device housed in the hand shower head.
FIG. 5 is a cross-sectional view illustrating water passages switched in the hand shower head.
FIG. 6 is a perspective view of a valve element housed in the water passage switching device.
FIG. 7 is a perspective view of an annular lock member provided in the water passage switching device.
FIG. 8 is a perspective view of a cam-constructing member provided in the water passage switching device.
FIG. 9 is a perspective view of an operation portion covering member provided in the water passage switching device.
FIG. 10 is a cross-sectional perspective view of the operation portion covering member provided in the water passage switching device.
FIG. 11 is a diagram for explaining actions of the water passage switching device housed in the hand shower head.
FIG. 12 is a diagram for explaining actions of the water passage switching device housed in the hand shower head.
FIG. 13 is a perspective view illustrating an entire faucet device containing a water passage switching device according to a second embodiment of the present invention.
FIG. 14 is a cross-sectional plane view of the faucet device containing the water passage switching device according to the second embodiment of the present invention.
FIG. 15 is a cross-sectional front view of the faucet device containing the water passage switching device according to the second embodiment of the present invention.
FIG. 16 is a cross-sectional side view of the faucet device containing the water passage switching device according to the second embodiment of the present invention.
FIG. 17 is a cross-sectional enlarged view of the water passage switching device according to the second embodiment of the present invention.
FIG. 18 is an exploded perspective view of the water passage switching device according to the second embodiment of the present invention.
FIG. 19 is a perspective view of a pivot receiving member used in the water passage switching device according to the second embodiment of the present invention.
FIG. 20 is a perspective view of a pivot member used in the water passage switching device according to the second embodiment of the present invention.
FIG. 21 is a perspective view of the faucet device illustrating a situation where a cover of a faucet device body containing the water passage switching device according to the second embodiment of the present invention is removed.

### DESCRIPTION OF EMBODIMENTS

A hand shower head according to a first embodiment of the present invention will now be described with reference to the accompanying drawings.

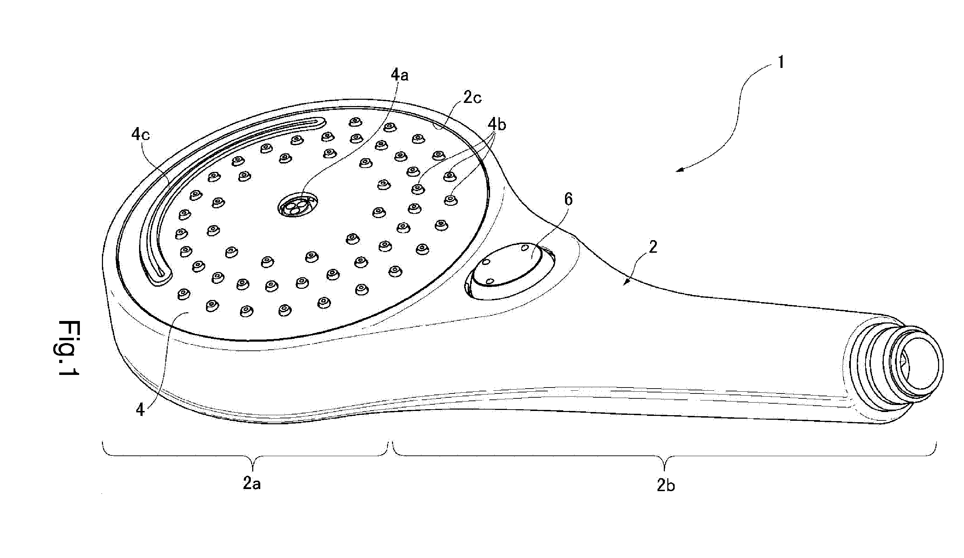

FIG. 1 is a perspective view illustrating an appearance of a hand shower head according to the first embodiment of the present invention.

As illustrated in FIG. 1, the hand shower head 1 of this embodiment comprises a shower head body 2, a water spray plate 4 attached to a distal end of this shower head body 2, and a push-button 6 for switching between water-stopping state and water-spouting state, and switching between three water spouting modes of the water-spouting state. Specifically, according to the push-button 6, it is possible to switch between water-stopping state and three water spouting modes, so that a total of four water spouting and stopping modes are switched to each other by the push-button 6. The shower head body 2 includes a gripper portion 2b for being gripped by a user, and a water spray portion 2a provided on the distal end side of and is thicker than the gripper portion 2b. The water spray portion 2a is formed with a circular opening 2c to which the water spray plate 4 is attached. Further, a shower hose (not shown) is connected to the base end side of the shower head body 2.

The water spray plate 4 is an approximately circular plate, in the center of which a water spray hole 4a for gyro-beat spouting, where spouting is performed with a water spray nozzle being rotated, is provided. A number of water spray holes 4b for spray spouting are provided around the water spray hole 4a, and an arc-shaped water spray hole 4c for waterfall-like spouting is provided on the distal end side on the shower head body 2. The push-button 6 is a disk-shaped button disposed in the gripper portion 2b of the shower head body 2 on the side closer to the opening 2c, and is directly operated by a user. By pushing this push-button 6 to tilt it to each direction, a water passage switching device housed in the shower head body 2 is actuated to switch between each water-spouting state of the gyro-beat spouting, spray spouting and waterfall-like spouting, and water-stopping state.

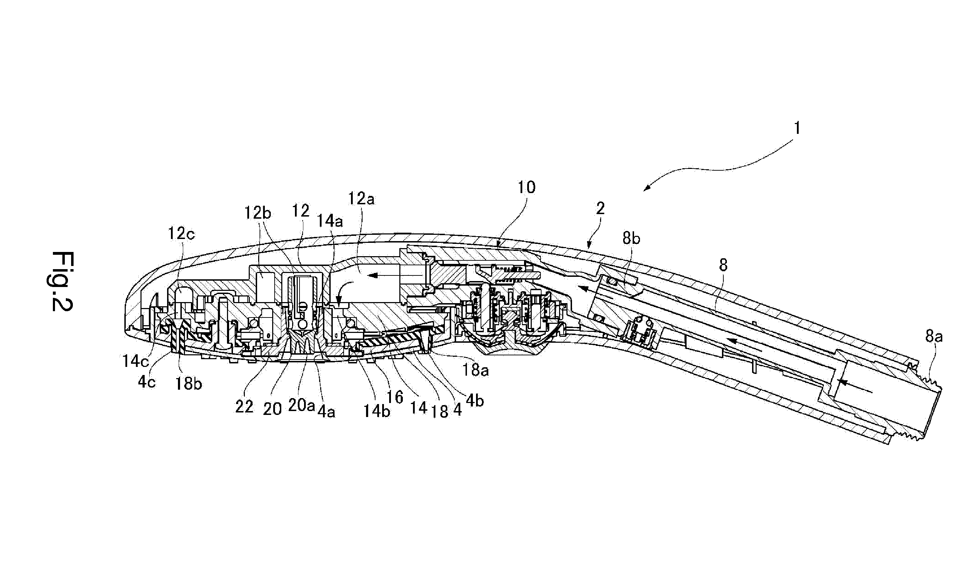

An internal structure of the hand shower head 1 according to the first embodiment of the present invention will be described below with reference to FIGS. 2 to 8.
FIG. 2 is a cross-sectional view of the hand shower head according to this embodiment. As illustrated in FIG. 2, the shower head body 2 houses a water flow passage forming member 8, a water passage switching device 10 connected to the distal end of the water flow passage forming member 8, and a first water spray chamber forming member 12 connected to the distal end of the water passage switching device 10. The shower head body 2 further houses a second water spray chamber forming member 14 attached to cover the first water spray chamber forming member 12, a third water spray chamber forming member 16 disposed on a back side of the water spray plate 4, and a water spray nozzle forming member 18 disposed on a back side of the third water spray chamber forming member 16. The shower head body 2 also houses a rotary nozzle 20 for performing a gyro-beat spouting, and a rotary nozzle supporting member 22 for supporting the rotary nozzle 20.

The water flow passage forming member 8 is an elongated tubular member, and has a base end formed as a connection end 8a which is connected to the shower hose (not shown). The water flow passage forming member 8 also has a distal end 8b to which the water passage switching device 10 is connected. An O-ring is disposed between the water flow passage forming member 8 and the water passage switching device 10 to ensure water-tightness therebetween. Details of the water passage switching device 10 will be described later.

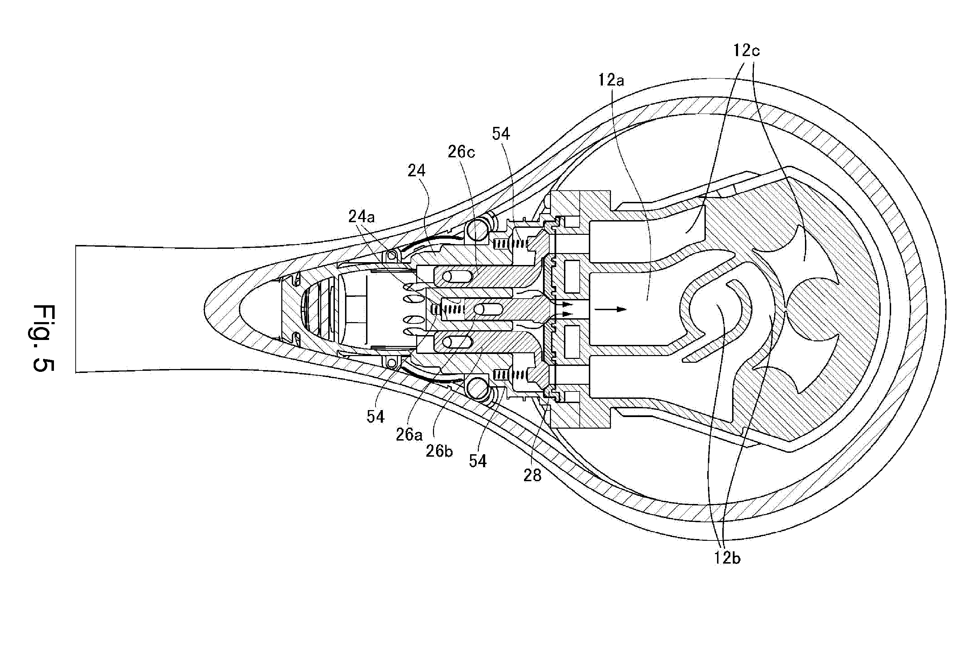

The first water spray chamber forming member 12 is a box-shaped member connected to the distal end side (downstream side) of the water passage switching device 10, and is housed in the back side of the water spray plate 4. An O-ring is disposed between the first water spray chamber forming member 12 and the water passage switching device 10 to ensure water-tightness therebetween. The first water spray chamber forming member 12 includes a first water passage 12a, a second water passage 12b and a third water passage 12c (also illustrated in FIG. 5) formed therein. Hot and cold water that has flowed out from the water passage switching device 10 passes through the first water passage 12a, the second water passage 12b and the third water passage 12c, and is guided to the water spray hole 4a for gyro-beat spouting, the water spray holes 4b for spray spouting and the water spray hole 4c for waterfall-like spouting, respectively. The side of the first water spray chamber forming member 12 which is closer to the water spray plate 4 is opened, and the second water spray chamber forming member 14 is attached to cover the opening.

The second water spray chamber forming member 14 is an approximately disk-shaped member disposed to cover the opening of the first water spray chamber forming member 12. The second water spray chamber forming member 14 is provided with a concave portion 14a in the center thereof so as to communicate with the first water passage 12a, into which the rotary nozzle 20 for gyro-beat spouting is rotatably disposed. The second water spray chamber forming member 14 is provided with a through-hole 14b so as to communicate with the second water passage 12b, and the hot and cold water that has passed the through-hole 14b is spouted from the water spray holes 4b for spray spouting. Further, the second water spray chamber forming member 14 is provided with a through-hole 14c so as to communicate with the third water passage 12c, and the hot and cold water that has passed the through-hole 14c is spouted from the water spray hole 4c for waterfall-like spouting.

The third water spray chamber forming member 16 is an approximately disk-shaped member disposed to overlap with the back side of the water spray plate 4. A space between the back side of the third water spray chamber forming member 16 and the front side of the second water spray chamber forming member 14 forms a water spray chamber for spray spouting.

The water spray nozzle forming member 18 is an approximately disk-shaped rubber member, and is disposed between the second water spray chamber forming member 14 and the third water spray chamber forming member 16. The water spray nozzle forming member 18 is provided with a number of water spray nozzles 18a for spray spouting. These water spray nozzles 18a are projected outside of the hand shower head 1 through a number of water spray holes 4b provided in the water spray plate 4 and a number of holes provided in the third water spray chamber forming member 16, each designed to align with a respective one of the water spray holes 4b. The water spray nozzle forming member 18 is also provided with a water spray nozzle 18b for waterfall-like spouting so as to be located at the distal end side of the hand shower head 1. The water spray nozzle 18b is projected outside of the hand shower head 1 through the arc-shaped water spray hole 4c provided in the water spray plate 4 and an arc-shaped hole provided in the third water spray chamber forming member 16 so as to be aligned with the water spray holes 4c. The water spray nozzle forming member 18 is made of a rubber, so that it is pressed against a fringe 14d of the second water spray chamber forming member 14, thereby to ensure water-tightness therebetween.

The rotary nozzle 20 is an approximately solid cylindrically-shaped member, and is provided with three spray nozzle holes 20a for gyro-beat spouting in an axial direction thereof. The rotary nozzle supporting member 22 is an approximately hollow cylindrically-shaped member for rotatably supporting the rotary nozzle 20. The rotary nozzle supporting member 22 rotatably receives and supports the rotary nozzle 20 therein, and is fitted into the concave portion 14a provided in the second water spray chamber forming member 14. When the hot and cold water flows into second water passage 12b of the first water spray chamber forming member 12, the flow force thereof urges the rotary nozzle 20 to make a precession (precessional movement) in the rotary nozzle supporting member 22, which causes the water spouting to be performed in a spiral manner.

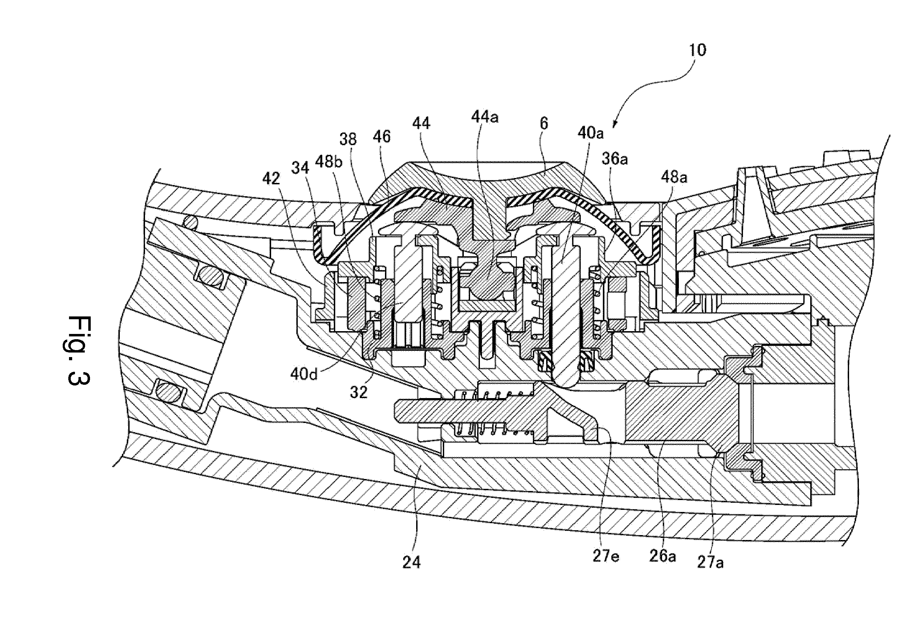

The water passage switching device 10 housed in the hand shower head 1 according to the first embodiment of the present invention will be described below with new reference to FIGS. 3 to 8.

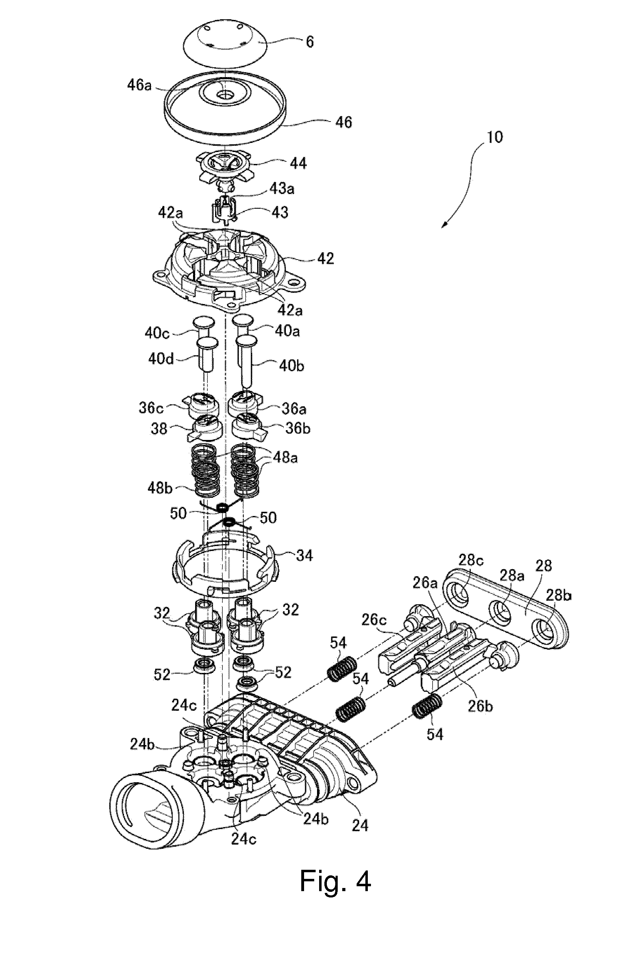

FIG. 3 is a cross-sectional enlarged view of a water passage switching device housed in the hand shower head. FIG. 4 is an exploded perspective view of the water passage switching device housed in the hand shower head.

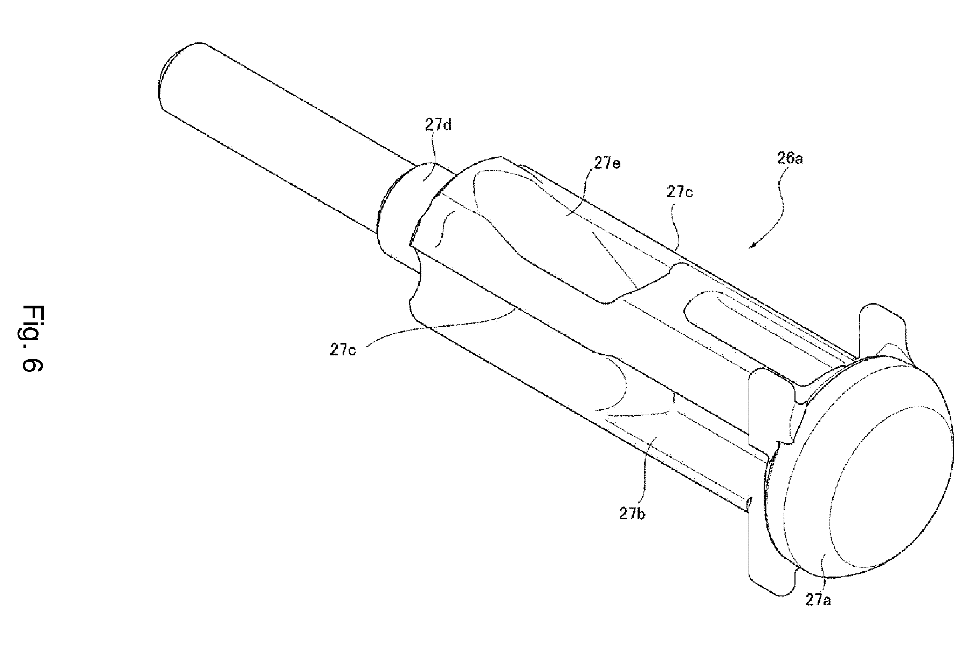

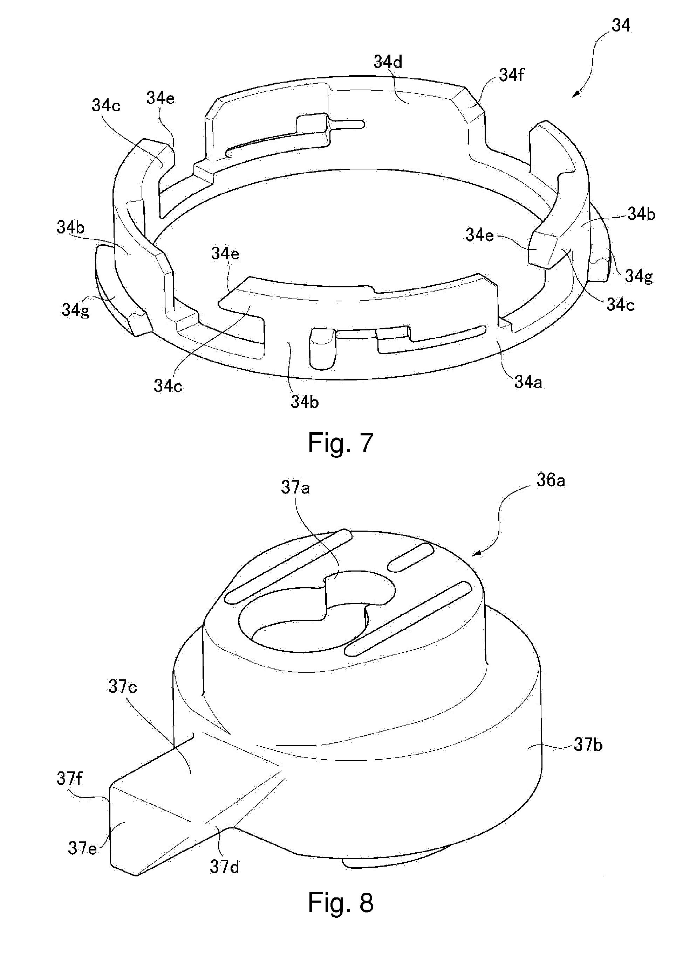

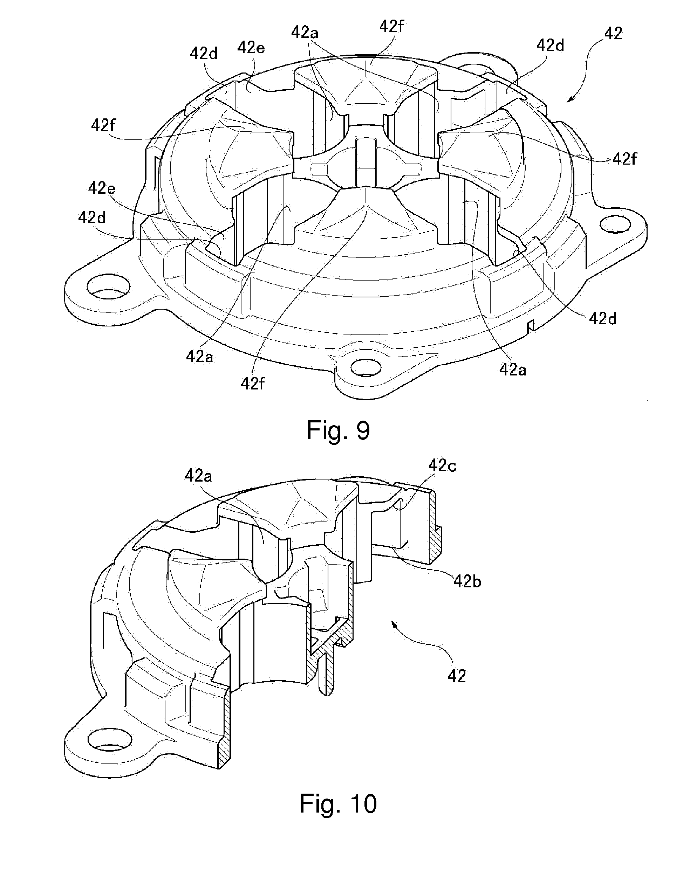

FIG. 5 is a cross-sectional view illustrating water passages switched in the hand shower head. FIG. 6 is a perspective view of a valve element housed in the water passage switching device. FIG. 7 is a perspective view of an annular lock member provided in the water passage switching device. FIG. 8 is a perspective view of a cam-constructing member provided in the water passage switching device. FIG. 9 is a perspective view of an operation portion covering member provided in the water passage switching device, and FIG. 10 is a cross-sectional perspective view of the operation portion covering member.

As illustrated in FIGS. 3 and 4, the water passage switching device 10 comprises a water passage switching device body 24, first, second and third valve elements 26a, 26b and 26c slidably arranged within the water passage switching device body 24, and a valve seat forming member 28 formed with three valve seats which are opened and closed by the valve elements.

The water passage switching device 10 further comprises four cylindrical support members 32, an annular lock member 34 which serves as a rotational lock member, first, second and third cam-constructing members 36a, 36b and 36c, a reset cam-constructing member 38, three operation rods 40a, 40b and 40c, an operation portion covering member 42, a pivoting member 44, and an elastic cover member 46.

As illustrated in FIGS. 3 to 5, the water passage switching device body 24 is an approximately tubular-shaped member which is configured such that the hot and cold water that has passed through the water flow passage forming member 8 is flowed therein. The water passage switching device body 24 includes therein three valve elements: a first valve element 26a, a second valve element 26b and a third valve element 26c arranged parallel to the width direction of the hand shower head 1 in side-by-side relation to each other. Further, these three valve elements are slidably supported in a longitudinal direction of the hand shower head 1, and are movable between a valve-open position and a valve-closed position. When any of the first, second and third valve elements is opened, the hot and cold water that has flowed in from the water flow passage forming member 8 passes through the opened valve seat to be flowed out from the water passage switching device 10.

As illustrated in FIG. 6, the first valve element 26a includes a seating portion 27a, a support frame 27b formed on the back side of the seating portion 27a, sliding protrusions 27c provided on both sides of the support frame 27b, and a spring attachment portion 27d formed on the back side of the support frame 27b.

The seating portion 27a is a disk-shaped portion provided at the distal end of the first valve element 26a. The valve hole provided in the valve seat forming member 28 is closed by the distal end of the seating portion 27a when it is seated on the valve seat forming member 28.

The support frame 27b is a rectangular parallelepiped frame formed on the back side of the seating portion 27a. The seating portion 27a is supported by the support frame 27b so as to be seated on a proper position of the valve seat forming member 28.

The sliding protrusions 27c are elongated protrusions each provided on both sides of the support frame 27b. The sliding protrusions 27c are slid along an elongated guiding portion 24a (FIG. 5) provided within the water passage switching device body 24. This causes the first valve element 26a to be linearly moved within the water passage switching device body 24.

The spring attachment portion 27d is a protrusion having a circular cross-section, formed on the back side of the support frame 27b. By fitting the spring attachment portion 27d inside a coil spring 54 (FIG. 5), the coil spring 54 is attached to the first valve element 26a. The coil spring 54 biases the first valve element 26a toward the valve-closed position.

Further, inside the support frame 27b, there is provided an inclined plane 27e which serves as moving direction conversion means. The inclined plane 27e is an inclined planar portion which is integrally formed inside the support frame 27b. The first valve element 26a is driven to a valve-opening direction by the inclined plane 27e when it is pushed by the distal end of the operation rod 40a, as described below.

The second valve element 26b and the third valve element 26c also have an approximately the same configuration as the first valve element 26a, as illustrated in FIGS. 4 and 5. However, the second and third valve elements are formed in L-shaped as a whole because the seating portion for opening and closing the valve seat and the support frame for supporting the seating portion are configured to be offset from each other. Additionally, in the second and third valve elements, the coil spring 54 is attached to the back side of the seating portion, which biases the second and third valve elements to the valve-closed position, respectively. Further, the support frame of the second valve element 26b and the third valve element 26c is also provided with an inclined plane as with the first valve element 26a. Each of the second and third valve elements is driven to the valve-opening direction by the inclined plane when it is pushed by a respective one of the operation rods 40b and 40c.

As illustrated in FIG. 4, the valve seat forming member 28 is an approximately oval-shaped plate-like member, in which three valve holes 28a, 28b and 28c are formed in line at regular intervals on which the first valve element 26a, the second valve element 26b and the third valve element 26c are seated, respectively.

As illustrated in FIGS. 3 and 4, the cylindrical support members 32 are cylindrically-shaped members which are arranged on the water passage switching device body 24 on the upper side (the side of water spray plate of the hand shower head 1) thereof in FIG. 3. The four cylindrical support members 32 are disposed on the upper circumference of the water passage switching device body 24 at regular intervals. Three coil springs 48a which serve as cam biasing means and a coil spring 48b which serves as resetting cam biasing means are disposed to surround each cylindrical support member 32, respectively. On each coil spring 48a, a first, second and third cam-constructing members 36a, 36b and 36c are disposed to cover each cylindrical support member 32, respectively. Therefore, each cam-constructing member is biased by the coil spring 48a toward an initial position (upper side in FIG. 3) along the cylindrical support member 32. Likewise, on the coil spring 48b, a reset cam-constructing member 38 is disposed to cover the cylindrical support member 32. Therefore, the reset cam-constructing member 38 is biased by the coil spring 48b toward an initial position (upper side in FIG. 3) along the cylindrical support member 32.

As illustrated in FIGS. 4 and 7, the annular lock member 34 is an annular-shaped member, and is disposed to surround the periphery of the four cylindrical support members 32. The annular lock member 34 is disposed in a rotatably movable manner around the cylindrical support members 32 between a locking position and an unlocking position about the central axis of the annular lock member 34. Further, the annular lock member 34 is biased toward the locking position by two torsion springs 50 (FIG. 4) which serve as lock member biasing means. Each torsion spring 50 is fitted in a respective one of shaft portions 24c (FIG. 4) which are formed on the water passage switching device body 24. Each torsion spring 50 has one end in engagement with the annular lock member 34 and the other end in engagement with the operation portion covering member 42 (FIG. 4), thereby to bias the annular lock member 34 to be rotated about its central axis toward the locking position. The two torsion springs 50 are disposed at regular intervals on a periphery centered on the central axis of the annular lock member 34

The annular lock member 34 further includes an annular-shaped annular portion 34a, three stand-out portions 34b extending from the annular portion 34a, engaging pawls 34c each formed on the distal end of the stand-out portions 34b, and a resetting stand-out portion 34d extending from the annular portion 34a.

As illustrated in FIG. 7, the three stand-out portions 34b are protrusions which extend from the annular portion 34a in a direction approximately parallel to the central axis of the annular portion 34a. At each of the distal end of the stand-out portions 34b, an engaging pawl 34c is formed which extends to a circumferential direction of the annular portion 34a. Accordingly, each stand-out portion 34b and engaging pawl 34c constructs an inverted L-shaped engaging portion, respectively. Each stand-out portion 34b is provided on the annular portion 34a at intervals of 90-degree central angle.

Further, on the top surface side (the side opposite to the annular portion 34a) of each engaging pawl 34c, a cam surface 34e is provided which is a slope inclined with respect to the annular portion 34a. The annular lock member 34 is driven from the locking position to the unlocking position against the biasing force of the torsion springs 50 by the cam surfaces 34e which serve as pushed portions when these cam surfaces are pushed from the upper side (the side opposite to the annular portion 34a) by the first, second and third cam-constructing members 36a, 36b and 36c. On the other hand, when the annular lock member 34 is returned to the locking position by the biasing force of the torsion springs 50, any of the cam-constructing members pressed down from the initial position is engaged with the lower side (the side facing to the annular portion 34a) of the engaging pawl 34c and held in the pressed-down position. In this embodiment, a cam surface 34e which serves as a pushed portion is formed on the top surface side of each engaging pawl 34c, so that the pushed portion and the engaging portion are integrally formed.

The resetting stand-out portion 34d is a protrusion which extends from the annular portion 34a in a direction approximately parallel to the central axis of the annular portion 34a. The resetting stand-out portion 34d is formed to have a width wider than the stand-out portion 34b, and is provided with a cam surface 34f which is inclined with respect to the annular portion 34a on a top surface side (the side opposite to the annular portion 34a) thereof. The resetting stand-out portion 34d is provided on the annular portion 34a at intervals of 90-degree central angle with respect to each of the two stand-out portions 34b. Therefore, the three stand-out portions 34b and the resetting stand-out portion 34d are provided at intervals of 90-degree central angle with each other.

The annular lock member 34 is driven from the locking position to the unlocking position against the biasing force of the torsion springs 50 by the cam surface 34f of the resetting stand-out portion 34d when it is pushed from the upper side (the side opposite to the annular portion 34a) by the reset cam-constructing member 38. However, since the resetting stand-out portion 34d is not provided with the engaging pawl 34c, when the pushing force acting on the reset cam-constructing member 38 is removed, the reset cam-constructing member 38 is returned to its initial position without being held.

As illustrated in FIGS. 3, 4 and 8, the first cam-constructing member 36a is a circular cap-like member having an opened lower side (the side facing to the water passage switching device body 24), and is configured to receive the cylindrical support member 32 in the opening (FIG. 3). This causes the first cam-constructing member 36a to be movably supported along the cylindrical support member 32. The first cam-constructing member 36a is formed with a gourd-shaped attaching hole 37a, and the operation rod 40a is attached to the first cam-constructing member 36a by being fitted in the attaching hole 37a (FIG. 3).

In addition, the first cam-constructing member 36a is formed with a flange 37b on the lateral side thereof in a manner to surround the periphery of the first cam-constructing member 36a. The first cam-constructing member 36a is biased upwardly (to the direction opposite to the water passage switching device body 24) by the coil spring 48a when it is engaged with the flange 37b.

Further, the first cam-constructing member 36a has an operation cam 37c provided in one location of the lateral side thereof in a manner to project to the radially outward direction. The lower side surface (the surface facing to the water passage switching device body 24) of the operation cam 37c is obliquely cut out, and is formed with an inclined cam surface 37d. The cam surface 37d is formed to have an angle conforming to the cam surface 34e of the annular lock member 34. When the first cam-constructing member 36a is pressed down from its initial position, the cam surface 37d of the first cam-constructing member 36a and the cam surface 34e of the annular lock member 34 make a sliding movement with each other, causing the annular lock member 34 to be rotated from the locking position toward the unlocking position.

In addition, as illustrated in FIG. 4, the second and third cam-constructing members 36b and 36c are configured in an identical shape to the first cam-constructing member 36a. An operation rod 40b is attached to the second cam-constructing member 36b, while an operation rod 40c is attached to the third cam-constructing member 36c. Further, the second and third cam-constructing members 36b and 36c are also biased upwardly (to the direction opposite to the water passage switching device body 24) by the coil spring 48a, as with the first cam-constructing member 36a. The cam surface provided on each of the second and third cam-constructing members 36b and 36c also makes a sliding movement with the corresponding cam surface 34e of the annular lock member 34, causing the annular lock member 34 to be rotated from the locking position toward the unlocking position.

Further, as illustrated in FIG. 4, the reset cam-constructing member 38 is also configured in an identical shape to the first cam-constructing member 36a. The operation cam provided on the reset cam-constructing member 38 functions as a resetting cam. An operation rod 40d is attached to the reset cam-constructing member 38, which is configured to be shorter than other operation rods. The reset cam-constructing member 38 is also biased upwardly (to the direction opposite to the water passage switching device body 24) by the coil spring 48b, as with the first cam-constructing member 36a. The cam surface provided on the reset cam-constructing member 38 is formed to have an angle conforming to the cam surface 34f provided on the resetting stand-out portion 34d of the annular lock member 34. When the reset cam-constructing member 38 is pressed down from its initial position, the cam surface of the reset cam-constructing member 38 and the cam surface 34f of the resetting stand-out portion 34d make a sliding movement with each other, causing the annular lock member 34 to be rotated from the locking position toward the unlocking position.

Each of the first, second and third cam-constructing members 36a, 36b and 36c, and the reset cam-constructing member 38 is disposed to receive a respective one of the four cylindrical support members 32. Each cylindrical support member 32 is arranged on a circumference which forms a concentric circle with the annular lock member 34. Therefore, the first, second and third cam-constructing members 36a, 36b and 36c, and the reset cam-constructing member 38 are arranged along the circumference of the annular lock member 34.

As illustrated in FIG. 4, the operation rods 40a, 40b and 40c which serve as valve actuating rods are shafts having a circular cross-section formed in an identical shape, the distal end of which is formed as a hemisphere surface. Each of the operation rods 40a, 40b and 40c is attached to a respective one of the first, second and third cam-constructing members 36a, 36b and 36c, and is arranged around a pivot point about which the pivoting member 44 makes a pivoting movement. Each of the operation rods 40a, 40b and 40c has a base end (the side opposite to the water passage switching device body 24) with expanded diameter whose end face is formed in a convex shape which is raised in the middle. The base end of the operation rod 40d attached to the reset cam-constructing member 38 is also formed in the same shape.

As illustrated in FIG. 3, the operation rod 40a attached to the first cam-constructing member 36a is projected to the lower side (in a direction of water passage switching device body 24) through the cylindrical support member 32. The projected operation rod 40a is inserted in the water passage switching device body 24 through the circular hole 24b (FIG. 4) provided in the water passage switching device body 24. The distal end of the inserted operation rod 40a abuts the first valve element 26a. In addition, a doughnut-shaped packing (gasket) 52 is disposed in each circular hole 24b to ensure water-tightness between the operation rod 40a and the water passage switching device body 24.

According to this configuration, when the first cam-constructing member 36a is downwardly (in a direction of water passage switching device body 24) moved along the cylindrical support member 32, the operation rod 40a is also downwardly moved together, causing the distal end of the operation rod 40a to push against the inclined plane 27e of the first valve element 26a. This drives the first valve element 26a to the valve-opening direction.

According to the similar configuration, when the second cam-constructing member 36b is pressed down, the operation rod 40b attached to the second cam-constructing member 36b pushes against the inclined plane provided on the second valve element 26b to drive the second valve element 26b to the valve-opening direction. When the third cam-constructing member 36c is pressed down, the operation rod 40c attached to the third cam-constructing member 36c pushes against the inclined plane provided on the third valve element 26c to drive the third valve element 26c to the valve-opening direction.

A structure of the operation portion covering member 42 will be described below with new reference to FIGS. 9 and 10. As illustrated in FIG. 4, the operation portion covering member 42 is a circular cup-like member having an opened lower side (the side facing to the water passage switching device body 24). The operation portion covering member 42 is attached to the water passage switching device body 24, inside of which the annular lock member 34, the first, second and third cam-constructing members 36a, 36b and 36c, the coil spring 48a, and the torsion springs 50 are housed.

As illustrated in FIG. 9, the operation portion covering member 42 is formed with four openings 42a on the upper end surface (the surface opposite to the water passage switching device body 24) thereof. Each of the upper portions of the first, second and third cam-constructing members 36a, 36b and 36c, and the reset cam-constructing member 38 is projected from the upper end surface of the operation portion covering member 42 through a respective one of the four openings 42a. Each flange 37b of each cam-constructing member and the reset cam-constructing member is engaged with an edge of each opening 42a, thereby to retain each cam-constructing member and the reset cam-constructing member inside the operation portion covering member 42.

The annular lock member 34 is provided with two flanges 34g (FIG. 7) on an outer periphery thereof. On the other hand, as illustrated in FIG. 10, the operation portion covering member 42 is formed with a stepped portion 42b on an inner lower area thereof. The rotational movement of the annular lock member 34 within the operation portion covering member 42 is guided by the stepped portion 42b when each flange 34g is received under the stepped portion 42b. Further, the operation portion covering member 42 has an inner ceiling surface 42c which is formed to make a sliding movement with respect to the stand-out portion 34b of the annular lock member 34 and the upper end surface of the resetting stand-out portion 34d. The rotational movement of the annular lock member 34 is also guided by this ceiling surface 42c. Therefore, the operation portion covering member 42 functions as a rotation guiding member for guiding the rotational movement of the annular lock member 34.

Further, each operation cam 37c of the first, second and third cam-constructing members and the reset cam-constructing member 38 is guided by the operation portion covering member 42 when it is moved between its initial position and pressed-down position in a direction parallel to the central axis of the annular lock member 34. Specifically, the distal end surface 37e (FIG. 8) of each operation cam 37c is slid and guided with respect to each inner wall surface 42d (FIG. 9) of the operation portion covering member 42. The vertical surface 37f on the opposite side of the cam surface 37d of each operation cam 37c is slid and guided with respect to each vertical surface 42e (FIG. 9) which is oriented in a radial direction of the operation portion covering member 42. Therefore, the operation portion covering member 42 functions as a cam guiding member for guiding a movement of each operation cam 37c in a direction parallel to the central axis of the annular lock member 34.

As illustrated in FIG. 4, the pivoting member 44 is an approximately disk-shaped member. The pivoting member 44 is provided, at the center thereof, with a downwardly protruding pivoting protrusion 44a (FIG. 3) whose distal end is formed as a spherical surface. The distal end of the pivoting protrusion 44a is received in a pivot concave portion 43a of a pivot-receiving member 43. The contact point between the distal end of the pivoting protrusion 44a and the pivot concave portion 43a functions as a pivot point which is located on the central axis of the annular lock member 34. The pivot-receiving member 43 is received in a concave portion provided at the center of the upper end surface of the operation portion covering member 42. When the pivoting member 44 is tilted to any direction about the pivot point, the underside surface (the surface facing to the water passage switching device body 24) of the pivoting member 44 pushes the upper end of any of the operation rods 40a, 40b and 40c, causing the cam-constructing member along with the operation rod to be moved to its pressed-down position. When the pivoting member 44 is tilted toward the reset cam-constructing member 38, the pivoting member 44 pushes the reset cam-constructing member 38, causing the reset cam-constructing member 38 to be moved to its pressed-down position.

In this regard, the base end of each operation rod 40a, 40b, 40c and 40d having an expanded diameter is formed as a concave surface, which is an approximately the same shape as a trajectory made by the pivoting member 44 when it is tilted. This configuration makes it possible to reduce the wear caused by a contact as compared to the case of forming the base end as a flat surface. Further, the base end and a surface of the pivoting member 44 contacting with the base end are formed to be coincident with each other and to have a large contact area. Specifically, each operation rod and the pivoting member 44 are configured to make linear contact or surface contact with each other. While the base end of each operation rod 40a, 40b, 40c and 40d has an expanded diameter (the base end is expanded in all directions) in this embodiment, it is also possible to configure each operation rod to have a base end formed in a shape expanded only in radially outward direction of a circle centered on the pivot point. This makes it possible to position the contact point between the base end of each operation rod and the pivoting member 44 in radially outward location, while disposing each operation rod in proximity to the center of the annular lock member 34. This configuration makes it possible to set the tilting angle of the pivoting member 44 needed to move each operation rod to be small.

On the other hand, each of four raised portions 42f is provided between adjacent ones of the four openings 42a on an upper surface of the operation portion covering member 42 (FIG. 9). A ridge line of each of the raised portions 42f is oriented in a radial direction of the operation portion covering member 42, and each raised portion 42f becomes highest at the intermediate position between the adjacent openings 42a. Thus, in the event of tilting movement of the pivoting member 44 in a direction intermediate between the cam-constructing members or in a direction intermediate between the cam-constructing member and the reset cam-constructing member, the pivoting member 44 and the ridge line of the raised portion 42f interfere with each other to prevent the tilting movement in that direction. For this reason, the pivoting member 44 is always tilted in a direction of any of the cam-constructing members or the reset cam-constructing member. Thus, the operation portion covering member 42 functions as a tilting movement restricting member for restricting the tilting movement of the pivoting member 44 in a predetermined four directions.

As illustrated in FIG. 4, the elastic cover member 46 is an approximately circular bowl-shaped elastic member, and is formed with an opening 46a in the center thereof. The push-button 6 is attached to the pivoting member 44 through the opening 46a (FIG. 3). Specifically, the elastic cover member 46 is fixed by being sandwiched between the push-button 6 and the pivoting member 44. In this way, the push-button 6 and the pivoting member 44 are integrated and function as a pivotally movable tilting operation member, where the push-button 6 constitutes an operation portion of the tilting operation member to which an operation force is applied by a user, and the pivoting protrusion of the pivoting member 44 constitutes a tilting shaft of the tilting operation member. The elastic cover member 46 is disposed to cover an upper end portion (a portion opposite to the water passage switching device body 24) of the operation portion covering member 42. The elastic cover member 46 is composed of a flexible elastic body, and thus when a push operation is performed on the push-button 6, it is elastically deformed to allow tilting movement of the push-button 6 and the pivoting member 44 about the pivot point. When the operation force acting on the push-button 6 is removed, the elastic cover member 46 is returned to the original shape due to its elasticity to cause the push-button 6 and the pivoting member 44 to be returned to their untilted position.

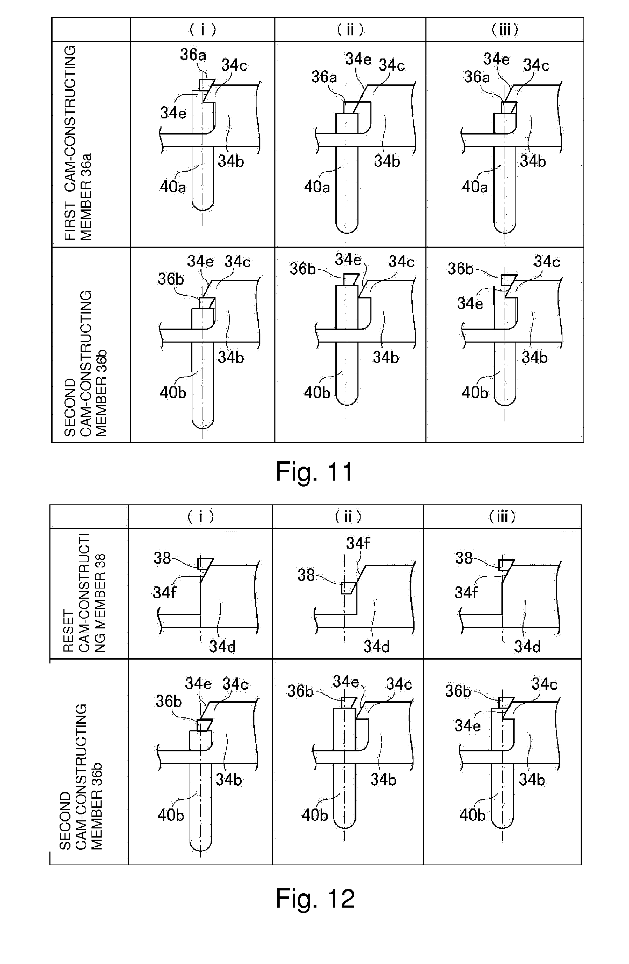

Actions of the hand shower head 1 according to the first embodiment of the present invention will be described below with new reference to FIGS. 11 and 12. FIGS. 11 and 12 are diagrams for explaining actions of the water passage switching device 10 housed in the hand shower head 1.

Firstly, an outline of actions of the hand shower head 1 will be described with reference to FIGS. 1, 2 and 5.
When a user of the hand shower head 1 pushes the push-button 6 to tilt it to the side of the water spray plate 4 (the side where the first cam-constructing member 36a and the operation rod 40a are disposed), the first valve element 26a is caused to be in a valve-open state to initiate water spouting. When the first valve element 26a is caused to be in a valve-open state, the hot and cold water that has flowed from the water flow passage forming member 8 into the water passage switching device 10 flows through the periphery of the first valve element 26a into the valve hole 28a of the valve seat forming member 28 as indicated by arrows in FIGS. 2 and 5 (FIGS. 2 and 5 illustrates the valve-closed state). The hot and cold water that has passed through the valve hole 28a flows into the first water passage 12a of the first water spray chamber forming member 12, and then flows through the through-hole 14b (FIG. 2) of the second water spray chamber forming member 14 which is formed to communicate with the first water passage 12a into a space between the second water spray chamber forming member 14 and the water spray nozzle forming member 18. The hot and cold water that has flowed into this space is spouted from a number of water spray nozzle 18a provided in the water spray nozzle forming member 18.

Then, when the user pushes the push-button 6 to tilt it laterally (to the side where the second cam-constructing member 36b and the operation rod 40b are disposed), the first valve element 26a that has been opened is moved to the valve-closed position whereas the second valve element 26b is moved to the valve-open position. It is noted that the action of the water passage switching device 10 for moving the first valve element 26a to the valve-closed position and moving the second valve element 26b to the valve-open position will be described later. When the second valve element 26b is moved to the valve-open position, the hot and cold water that has flowed into the water passage switching device 10 flows through the periphery of the second valve element 26b into the valve hole 28b of the valve seat forming member 28. The hot and cold water that has passed through the valve hole 28b flows into the second water passage 12b of the first water spray chamber forming member 12. The hot and cold water that has flowed into the second water passage 12b flows through the through-hole 14a (FIG. 2) of the second water spray chamber forming member 14 which is formed to communicate with the second water passage 12b, and is spouted from the spray nozzle hole 20a of the rotary nozzle 20. The rotary nozzle 20 is urged to make a precessional rotary movement by the force of the hot and cold water that has flowed into the second water passage 12b to cause the hot and cold water spouted from the spray nozzle hole 20a to be a spiral gyro-beat spouting.

Further, when the user pushes the push-button 6 to tilt it laterally (to the side where the third cam-constructing member 36c and the operation rod 40c are disposed), the second valve element 26b that has been opened is moved to the valve-closed position whereas the third valve element 26c is moved to the valve-open position. When the third valve element 26c is moved to the valve-open position, the hot and cold water that has flowed into the water passage switching device 10 flows through the periphery of the third valve element 26c into the valve hole 28c of the valve seat forming member 28. The hot and cold water that has passed through the valve hole 28c flows into the third water passage 12c of the first water spray chamber forming member 12. The hot and cold water that has flowed into the third water passage 12c flows out from the through-hole 14c which is formed to communicate with the third water passage 12c. The hot and cold water that has flowed out from the through-hole 14c is spouted in a waterfall-like manner from an arc-shaped water spray nozzle 18b provided opposite the through-hole 14c in the water spray nozzle forming member 18.

Then, when the user pushes the push-button 6 to tilt it to the side opposite to the water spray plate 4 (to the side where the reset cam-constructing member 38 is disposed), the third valve element 26c that has been opened is moved to the valve-closed position and the hand shower head 1 becomes in a water-stopping state.

Actions of the water passage switching device 10 will be described below with reference to FIGS. 11 and 12. FIG. 11 is an explanatory diagram of actions of the water passage switching device 10, illustrating the operation cam of the cam-constructing member, the operation rod attached to the cam-constructing member, and a part of the annular lock member 34, and representing a positional relationship therebetween. The upper stage of FIG. 11 sequentially illustrates a process that the first cam-constructing member 36a is pressed down from the initial position to the pressed-down position and held therein, and the lower stage sequentially illustrates a process that the second cam-constructing member 36b which has been held in the pressed-down position is returned to the initial position simultaneously with the action of the upper stage.

Firstly, in the situation of FIG. 11(i), the first cam-constructing member 36a and the operation rod 40a attached thereto are in the initial position, and the first valve element 26a disposed in association with the operation rod 40a is in the valve-closed position (the position of the first valve element 26a in FIG. 3).
p At the same time, in the situation of FIG. 11(i), the second cam-constructing member 36b and the operation rod 40b attached thereto is in the pressed-down position, and the second valve element 26b disposed in association with the operation rod 40b is in the valve-open position (the position where the operation rod 40b is pressed downward in FIG. 3 and the abutting valve element 26b is moved to the left).

The second cam-constructing member 36b is biased toward the initial position by the coil spring 48a. However, as illustrated in the lower stage of FIG. 11 (i), the second cam-constructing member 36b and the operation rod 40b is held in the pressed-down position against the biasing force of the coil spring 48a because the operation cam of the second cam-constructing member 36b is engaged with the corresponding engaging pawl 34c of the annular lock member 34 which is in the locking position.

Then, when the user operates the push-button 6 to press down the first cam-constructing member 36a, the operation cam 37c of the first cam-constructing member 36a presses the abutting cam surface 34e of the annular lock member 34, as illustrated in FIG. 11(ii). This causes the annular lock member 34 to be rotated in a counterclockwise direction in FIG. 4 (to the right side in FIG. 11) against the biasing force of the torsion springs 50.

When the first cam-constructing member 36a is pressed down to the position as illustrated in the upper stage of FIG. 11(ii), the annular lock member 34 is moved to the unlocking position. Simultaneously, as illustrated in the lower stage of FIG. 11(ii), the engaging pawl 34c that has been engaged with the second cam-constructing member 36b is also moved to the right side in FIG. 11. This causes the engagement between the second cam-constructing member 36b and the engaging pawl 34c to be released, and the second cam-constructing member 36b is returned to the initial position by the biasing force of the coil spring 48a. When the second cam-constructing member 36b and the operation rod 40b are returned to the initial position, the second valve element 26b abutting the operation rod 40b is moved to the valve-closed position by the biasing force of the coil spring 54 that is biasing the second valve element 26b.

Further, as illustrated in the upper stage of FIG. 11(iii), when the first cam-constructing member 36a is pressed down to the position where it is not engaged with the engaging pawl 34c, the annular lock member 34 is rotated in a clockwise direction in FIG. 4 (to the left side in FIG. 11) by the biasing force of the torsion springs 50 and moved to the locking position. When the annular lock member 34 is moved to the locking position, the first cam-constructing member 36a is set in the underside of the engaging pawl 34c to be engaged with the engaging pawl 34c, as illustrated in the upper stage of FIG. 11(iii). This causes the first cam-constructing member 36a to be held in the pressed-down position even after the removal of operation force applied by the user. Further, during the movement of the first cam-constructing member 36a and the operation rod 40a to the pressed-down position, the distal end of the operation rod 40a pushes the inclined plane 27e of the first valve element 26a, and the first valve element 26a is moved to the left side in FIG. 3 against the biasing force of the coil spring 54 attached thereto. When the first cam-constructing member 36a is held in the pressed-down position, the first valve element 26a abutting the operation rod 40a is held in the valve-open position, so that the water-spouting state is maintained.

As described above, in the situation of FIG. 11(i), the second cam-constructing member 36b is held in the pressed-down position and the second valve element 26b is opened, so that the gyro-beat spouting is being performed. In this situation, when the first cam-constructing member 36a is pressed down from the initial position to the pressed-down position, the second cam-constructing member 36b is moved from the pressed-down position to the initial position and the second valve element 26b is closed, as illustrated in FIG. 11(ii). Simultaneously, the first valve element 26a is opened to initiate the spray spouting. Further, as illustrated in FIG. 11(iii), the first cam-constructing member 36a which is pressed down to the pressed-down position is held therein, so that the spouting-state is maintained even after removal of the pushing force.

While the example as shown in FIG. 11 has described the case where the first cam-constructing member 36a is pushed during the gyro-beat spouting is performed, the water passage switching device 10 of this embodiment acts such that when a cam-constructing member for any water spouting is pressed down during the performance of another water spouting, the prior spouting is stopped and the spouting of the pattern corresponding to the pushed cam-constructing member is initiated.

Actions of the water passage switching device 10 when the reset cam-constructing member 38 is pushed will be described below with reference to FIG. 12.
FIG. 12 is an explanatory diagram of actions of the water passage switching device 10, illustrating a positional relationship between the operation cam of the reset cam-constructing member 38, the operation cam of the cam-constructing member, the operation rod attached to the cam-constructing member, and a part of the annular lock member 34. The upper stage of FIG. 12 sequentially illustrates a process that the reset cam-constructing member 38 is pressed down from the initial position to the pressed-down position and again returned to the initial position, and the lower stage sequentially illustrates a process that the second cam-constructing member 36b which has been held in the pressed-down position is returned to the initial position simultaneously with the action of the upper stage.

Firstly, in the situation of FIG. 12(i), the reset cam-constructing member 38 is in the initial position. On the other hand, in the situation of FIG. 12(i), the second cam-constructing member 36b and the operation rod 40b attached thereto are held in the pressed-down position, and the second valve element 26b is in the valve-open position.

Then, when the user operates the push-button 6 to press down the reset cam-constructing member 38, the cam surface 34f of the annular lock member 34 abutting the resetting cam of the reset cam-constructing member 38 is pressed, as illustrated in FIG. 12(ii). This causes the annular lock member 34 to be rotated in a counterclockwise direction in FIG. 4 (to the right side in FIG. 12) against the biasing force of the torsion springs 50.

When the reset cam-constructing member 38 is pressed down to the position as illustrated in the upper stage of FIG. 12(ii), the annular lock member 34 is moved to the unlocking position. Simultaneously, as illustrated in the lower stage of FIG. 12(ii), the engaging pawl 34c that has been engaged with the second cam-constructing member 36b is also moved to the right side in FIG. 12. This causes the engagement between the second cam-constructing member 36b and the engaging pawl 34c to be released, and the second cam-constructing member 36b is returned to the initial position and the second valve element 26b is moved to the valve-closed position.

Further, as illustrated in the upper stage of FIG. 12(ii), since the resetting stand-out portion 34d abutting the reset cam-constructing member 38 is not provided with an engaging pawl, the annular lock member 34 is maintained in the unlocking position even in the situation where the reset cam-constructing member 38 is pressed down to the pressed-down position.

Then, when the operation force applied by the user is removed, the reset cam-constructing member 38 is returned to the initial position by the biasing force of the coil spring 48a as illustrated in the upper stage of FIG. 12(iii).
When the reset cam-constructing member 38 is returned to the initial position, the annular lock member 34 is rotated in a clockwise direction in FIG. 4 (to the left side in FIG. 12) by the biasing force of the torsion springs 50 and moved to the locking position.

As described above, in the situation of FIG. 12(i), the second cam-constructing member 36b is held in the pressed-down position and the second valve element 26b is opened, so that the gyro-beat spouting is being performed. In this situation, when the reset cam-constructing member 38 is pressed down from the initial position to the pressed-down position, the second cam-constructing member 36b is moved from the pressed-down position to the initial position and the second valve element 26b is closed and the hand shower head 1 becomes in a water-stopping state, as illustrated in FIG. 12(ii). Further, as illustrated in FIG. 12, when the operation force applied by the user does not act any more, the reset cam-constructing member 38 is returned to the initial position.

While the example as shown in FIG. 12 has described the case where the reset cam-constructing member 38 is pushed during the gyro-beat spouting is performed, the water passage switching device 10 of this embodiment acts such that when the reset cam-constructing member 38 is pressed down during the performance of any water spouting, the prior spouting is stopped and all the cam-constructing members and the reset cam-constructing member 38 are returned to the initial position.

According to the water passage switching device 10 of the first embodiment of the present invention, four water spouting and stopping modes are directly switched to each other by tilting operation of a single push-button 6 in each direction. This makes it possible to improve the operability of the water passage switching device 10. Further, the water spouting and stopping modes are switched by the tilting operation of the single push-button 6. This makes it possible to ensure the user to switch to a desired water spouting and stopping mode only by roughly tilting the push-button 6.

According to the water passage switching device 10 of this embodiment, the push-button 6 and the pivot point is spaced apart by the pivoting protrusion 44a, and thus a user can tilt the pivoting member 44 in each direction only by moving the push-button 6 in an approximately horizontal direction. This makes it possible to allow the user to tilt the pivoting member 44 in each direction with his/her fingertip touching on the concave portion at the center of the push-button 6, and to easily switch the water spouting and stopping modes with one finger.

Further, according to the water passage switching device 10 of this embodiment, the pivoting member 44 pushes one end of the operation rods 40a, 40b and 40c through the line contact, and thus the pivoting member 44 is not likely to be worn even in the case of repetitive operation. This makes it possible to improve the durability of the water passage switching device 10.

According to the water passage switching device 10 of this embodiment, tilting direction of the pivoting member 44 is restricted by the operation portion covering member 42. This makes it possible to reliably select one mode of the four water spouting and stopping modes.

Further, according to the water passage switching device 10 of this embodiment, the push-button 6 is disposed in the gripper portion 2b of the shower head body 2. This makes it possible for a user to switch the water spouting and stopping modes with his/her finger which is holding the hand shower head 1. The water spouting and stopping modes can be switched only by moving (tilting) the push-button 6 with user's fingertip touching thereon. This makes it possible to easily switch between the four water spouting and stopping modes by the small-sized push-button 6.

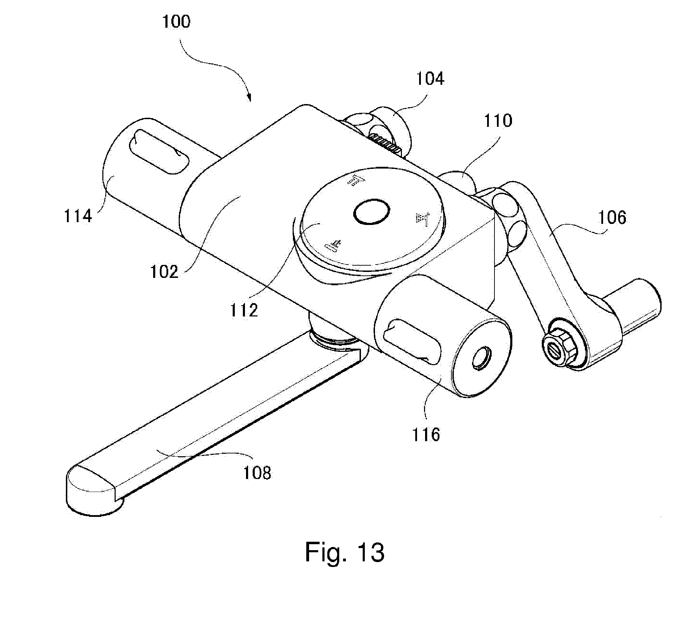

A faucet device containing a water passage switching device according to a second embodiment of the present invention will be described below with reference to FIGS. 13 to 21.
FIG. 13 is a perspective view illustrating an entire faucet device containing the water passage switching device according to the second embodiment of the present invention.
As illustrated in FIG. 13, the faucet device 100 comprises a faucet device body 102, a hot water supply pipe 104, a cold water supply pipe 106, a faucet spouting portion 108, a shower spouting portion 110, a water spouting and stopping modes switching operation portion 112 which serves as a tilting operation member, a temperature setting knob 114, and a flow rate setting knob 116. In use, a shower hose and a hand shower head (not shown) are attached to the shower spouting portion 110.

The hot water supply pipe 104 and the cold water supply pipe 106 are connected to the faucet device body 102. Hot water and cold water supplied through these pipes are mixed at a predetermined proportion by a thermo faucet contained in the faucet device body 102, and then subjected to flow rate adjustment by a flow adjusting valve to be spouted. The water spouting and stopping modes switching operation portion 112 is an operation portion provided to be pivotally movable about a pivot point at the center thereof. When a user pushes near the "faucet" marking of the water spouting and stopping modes switching operation portion 112, temperature and flow rate adjusted mixed water is spouted from the faucet spouting portion 108. Likewise, when a user pushes near the "shower" marking of the water spouting and stopping modes switching operation portion 112, temperature and flow rate adjusted mixed water is spouted via the shower spouting portion 110. Further, when a user pushes near the "stop" marking of the water spouting and stopping modes switching operation portion 112, the faucet device 100 becomes in a water-stopping state regardless of being in any water-spouting state.

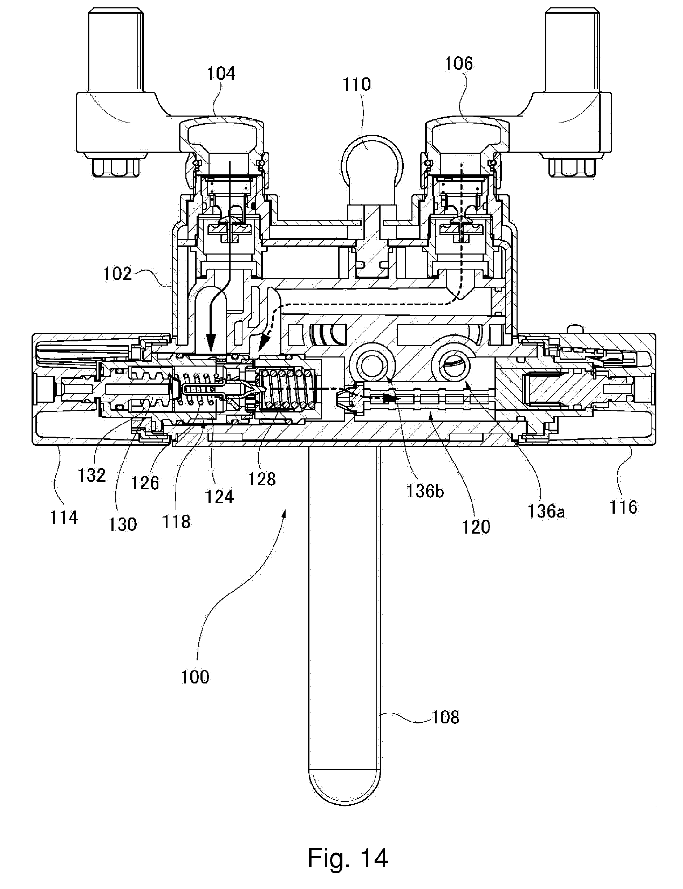

An internal structure of the faucet device 100 containing a water passage switching device according to the second embodiment of the present invention will be described below with reference to FIGS. 14 to 21.

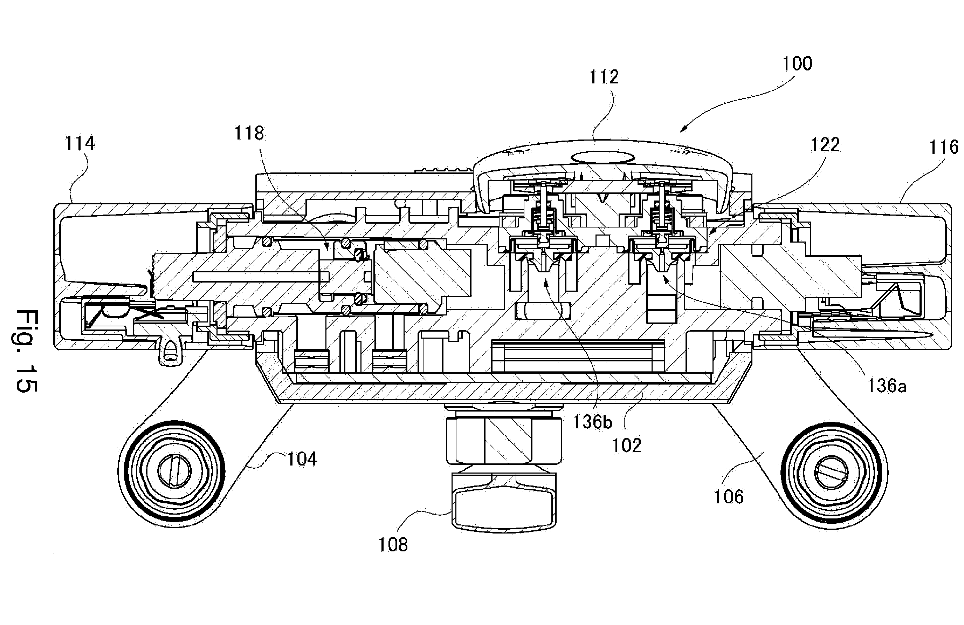

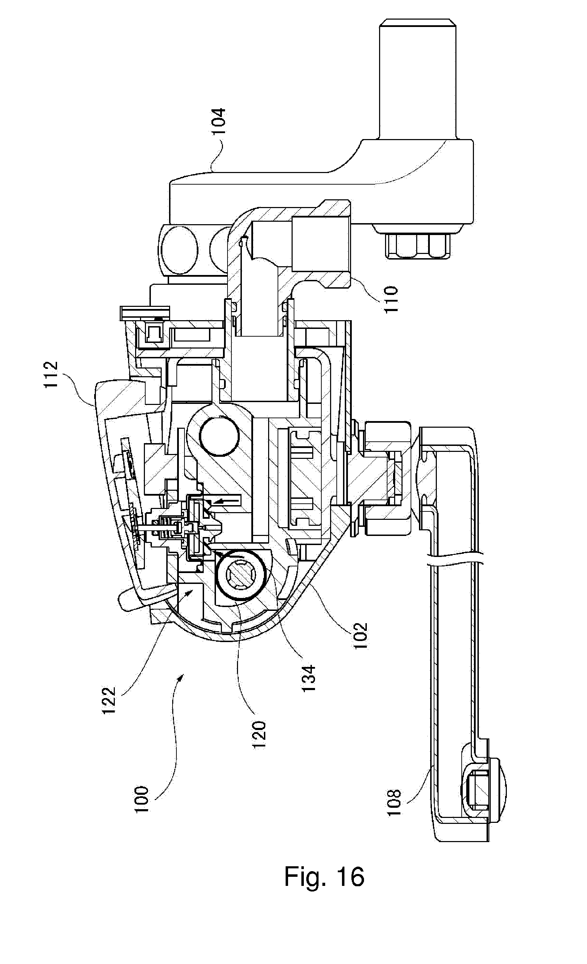

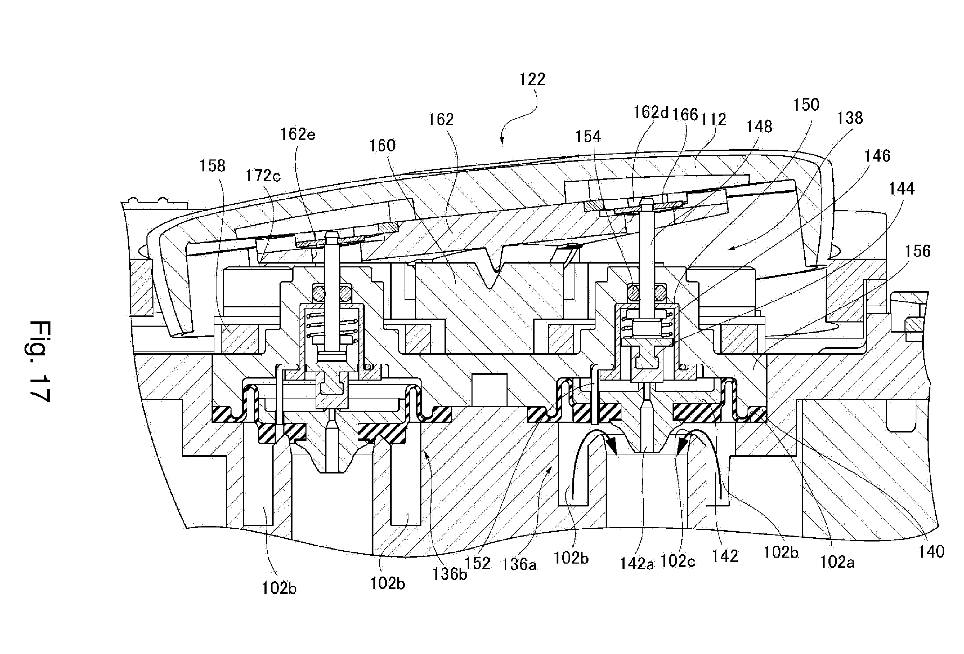

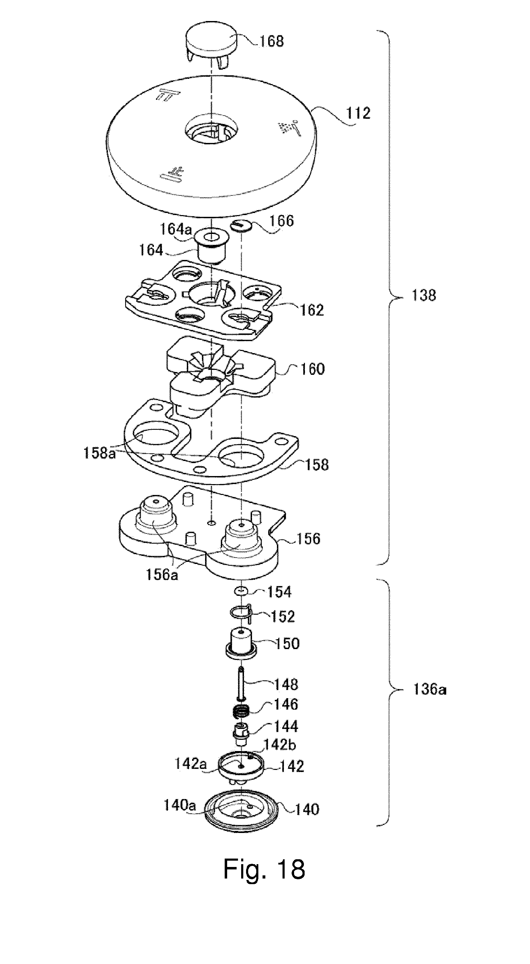

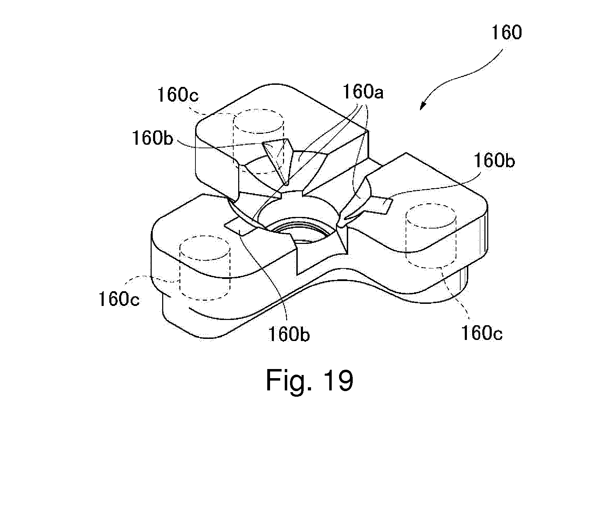

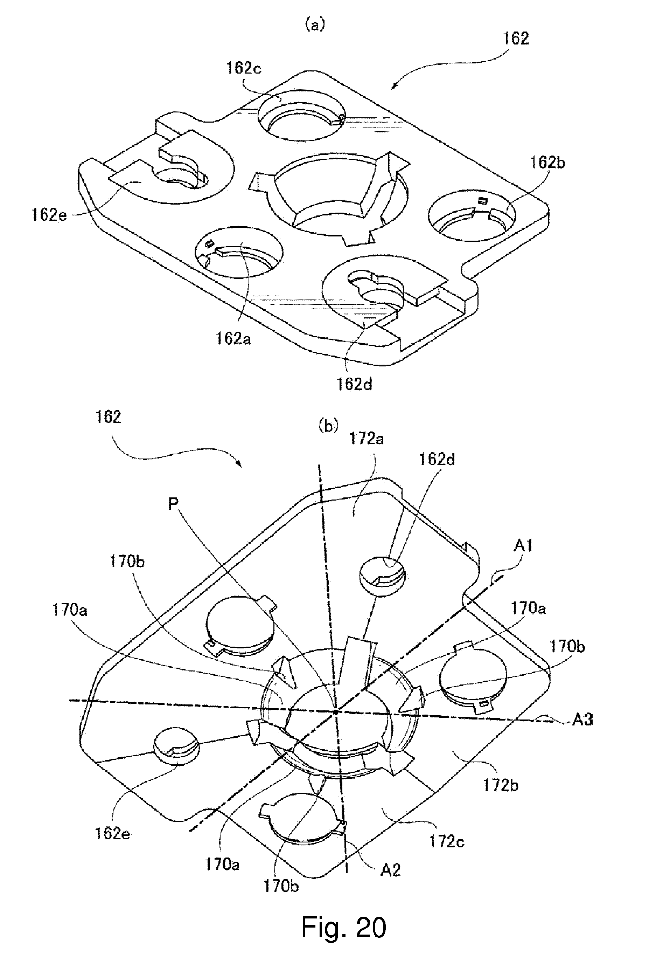

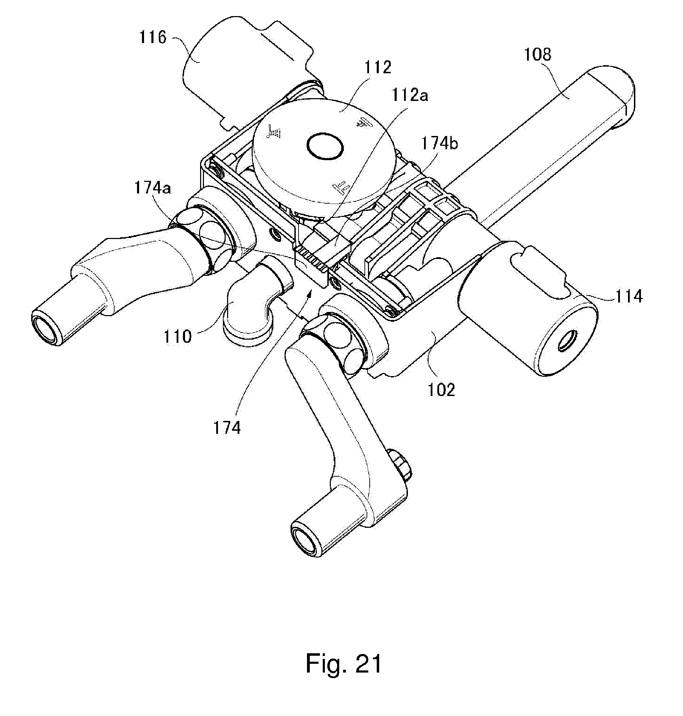

FIG. 14 is a cross-sectional plane view, FIG. 15 is a cross-sectional front view, and FIG. 16 is a cross-sectional side view of the faucet device 100. FIG. 17 is a cross-sectional enlarged view of the water passage switching device contained in the faucet device body. FIG. 18 is an exploded perspective view of the water passage switching device contained in the faucet device body. FIG. 19 is a perspective view of a pivot receiving member used in the water passage switching device contained in the faucet device body. FIG. 20 is a perspective view of a pivot member used in the water passage switching device contained in the faucet device body. FIG. 21 is a perspective view of the faucet device illustrating a situation where a cover of the faucet device body.

As illustrated in FIGS. 13 to 16, the faucet device body 102 is an approximately rectangular parallelepiped member having a front portion formed in a curved surface, in which a thermo faucet 118, a flow adjusting valve 120 and a water passage switching device 122 is contained.
The hot water supply pipe 104 and the cold water supply pipe 106 are lines connected to the back side of the faucet device body 102. The hot water supply pipe 104 is adapted to supply hot water that is spouted from a water heater to the faucet device body 102, while the cold water supply pipe 106 is adapted to supply tap water to the faucet device body 102. The hot water that has been supplied from the hot water supply pipe 104 flows through the faucet device body 102 along an solid arrow indicated in FIG. 14 into the thermo faucet 118. The cold water that has been supplied from the cold water supply pipe 106 flows through the faucet device body 102 along an dashed arrow indicated in FIG. 14 into the thermo faucet 118.

The faucet spouting portion 108 extends to protrude ahead (toward a user) from a bottom surface of the faucet device body 102, and has a spouting port provided in the lower portion of the distal end thereof.
The shower spouting portion backwardly (toward a wall surface) extends from a back side of the faucet device body 102, and has a spouting port provided toward a lower side thereof. This spouting port is designed to be connected by a shower hose (not shown).

The water spouting and stopping modes switching operation portion 112 is a disk-shaped member which is subjected to a direct push operation by a user, and has a "stop" marking in the front area, a "faucet" marking in the left rear area, and a "shower" marking in the right rear area. When a user pushes down near each marking, valves of the water passage switching device 122 disposed under the water spouting and stopping modes switching operation portion 112 are opened and closed to switch flow passes, resulting in switching of water spouting and stopping modes. The structure of the water passage switching device 122 will be described later. In this embodiment, the water spouting and stopping modes switching operation portion 112, when operated by a user, is tilted about the central pivot point to any of front, left rear or right rear directions, and held in that state.

The temperature setting knob 114 is an approximately cylindrically-shaped knob provided on the left side of the faucet device body 102. By rotating the temperature setting knob 114, a temperature setting of the contained thermo faucet 118 can be changed.
The flow rate setting knob 116 is an approximately cylindrically-shaped knob provided on the right side of the faucet device body 102. By rotating the flow rate setting knob 116, a flow rate settings of the contained flow adjusting valve 120 can be changed.

As illustrated in FIG. 14, the thermo faucet 118 includes a temperature adjusting valve element 124, biasing spring 126, shape memory alloy spring 128, temperature adjusting screw 130, and a biasing spring holder 132. The hot water and the cold water that have flowed into and mixed in the thermo faucet 118 flow from a lateral side of the thermo faucet 118 into the flow adjusting valve 120 disposed on the right side in FIG. 14.

The temperature adjusting valve element 124 is an approximately cylindrically-shaped valve element, and is disposed in a horizontally slidable manner in the thermo faucet 118. When the temperature adjusting valve element 124 is moved to the right in FIG. 14, an amount of hot water flowing into the thermo faucet 118 is increased, while an amount of cold water flowing into the thermo faucet 118 is decreased. This raises the temperature of the mixed water flowed from the thermo faucet 118. On the contrary, when the temperature adjusting valve element 124 is moved to the left in FIG. 14, an amount of cold water flowing into the thermo faucet 118 is increased, while an amount of hot water flowing into the thermo faucet 118 is decreased. This lowers the temperature of the mixed water flowed from the thermo faucet 118.

The biasing spring 126 is a coil spring which is coaxially disposed with the temperature adjusting valve element 124 in the thermo faucet 118. The biasing spring 126 biases the temperature adjusting valve element 124 to the right in FIG. 14.
The shape memory alloy spring 128 is a coil spring made from a shape memory alloy which is coaxially disposed with the temperature adjusting valve element 124 in the thermo faucet 118. The shape memory alloy spring 128 biases the temperature adjusting valve element 124 to the left in FIG. 14. When the temperature of the mixed water that has been mixed in the thermo faucet 118 is raised, a biasing force generated by the shape memory alloy spring 128 is increased, moving the temperature adjusting valve element 124 to the left in FIG. 14. This decreases the amount of hot water flowing into the thermo faucet 118 and lowers the temperature of the mixed water. On the other hand, when the temperature of the mixed water that has been mixed in the thermo faucet 118 is lowered, a biasing force generated by the shape memory alloy spring 128 is decreased, moving the temperature adjusting valve element 124 to the right in FIG. 14. This decreases the amount of cold water flowing into the thermo faucet 118 and raises the temperature of the mixed water.

The temperature adjusting screw 130 is an external thread provided to rotate along with the temperature setting knob 114.
The biasing spring holder 132 is an approximately cylindrically-shaped member, inside of which is formed with an internal thread. This internal thread is screwed with the temperature adjusting screw 130, where the rotational operation of the temperature setting knob 114 moves the biasing spring holder 132 to left or right in FIG. 14. The end of the biasing spring holder 132 opposite to the temperature setting knob 114 is abutted by the biasing spring 126, where the movement of the biasing spring holder 132 changes the biasing force of the biasing spring 126 for biasing the temperature adjusting valve element 124. This changes a position at which the biasing forces are balanced between the biasing spring 126 and the shape memory alloy spring 128, causing the temperature settings of the thermo faucet 118 to be modified.

As illustrated in FIG. 16, the flow adjusting valve 120 includes an approximately cylindrically-shaped flow adjusting valve element 134. The flow adjusting valve element 134 is rotated by the rotational operation of the flow rate setting knob 116, which causes an opening position of a valve port to be changed to modify the flow rate. The mixed water that has flowed out from the thermo faucet 118 flows into the inner side of the cylindrically-shaped flow adjusting valve element 134, and flows out to the outer side of the flow adjusting valve element 134 through the valve port. The mixed water that has flowed out from the flow adjusting valve 120 flows into the upstream side of the water passage switching device 122 as indicated by an solid arrow in FIG. 16.

A structure of the water passage switching device 122 according to the second embodiment of the present invention contained in the faucet device 100 will be described below with reference to FIGS. 17 to 21.
As illustrated in FIG. 17, the water passage switching device 122 includes two push type faucets 136a and 136b, and a pivot mechanism 138 for transmitting the operation made on the water spouting and stopping modes switching operation portion 112 to each push type faucet. As illustrated in FIG. 18, the push type faucet 136a has a diaphragm 140, a main valve body 142, a pilot valve 144, a pilot valve spring 146, a shaft 148 which serves as a valve actuating rod, a pressure chamber forming member 150, a cleaning pin 152, and an O-ring 154. It is noted that although the push type faucet 136b also has the same structure as the push type faucet 136a, the illustration is omitted in FIG. 18.

As also illustrated in FIG. 18, the pivot mechanism 138 has a base member 156, a holding plate 158, a pivot receiving member 160, a pivot member 162, a pivot member holder 164, a shaft stopper 166, and an operation portion holder 168.

Firstly, structures of each push type faucet will be described.
The diaphragm 140 is an approximately disk-shaped flexible member, and forms a valve element by integration with the main valve body 142. As illustrated in FIG. 17, an outer periphery of the diaphragm 140 is fixed to the faucet device body 102 by being sandwiched between a diaphragm fixing portion 102a of the faucet device body 102 and the base member 156. Further, the inner side of the fixed outer periphery of the diaphragm 140 is deformably constructed. Elastic deformation in this area makes it possible to move the valve element between a valve-open position and a valve-closed position. It is noted that FIG. 17 illustrates the push type faucet 136a in a valve-open state while the push type faucet 136b in a valve-closed state.

The main valve body 142 is an approximately disk-shaped member, and forms a valve element by integration with the diaphragm 140. The main valve body 142 also has a pilot valve port 142a provided on the central axis thereof.
The pilot valve 144 is an approximately solid cylindrically-shaped small valve element, and is provided to open and close the pilot valve port 142a of the main valve body 142 based on the operation of the water spouting and stopping modes switching operation portion 112.

The pilot valve spring 146 is disposed between the pilot valve 144 and a ceiling surface of the pressure chamber forming member 150, and is configured to bias the pilot valve 144 toward the pilot valve port 142a.
The shaft 148 has a lower end attached to the pilot valve 144, and is disposed to upwardly extend from the pilot valve 144. When the shaft 148 is pulled up by the operation of the water spouting and stopping modes switching operation portion 112, the pilot valve 144 is drawn away from the pilot valve port 142a against the biasing force of the pilot valve spring 146 to open the pilot valve port 142a.

The pressure chamber forming member 150 is a cup-like member having an opened lower end, and houses the pilot valve 144 and the pilot valve spring 146 therein. The pressure chamber forming member 150 is also provided with a hole at the center of the upper end surface thereof, through which the shaft 148 extends to the outside of a pressure chamber. The pressure chamber forming member 150 forms a pressure chamber consisting of its inside space and a space above the diaphragm 140 and the main valve body 142.

The cleaning pin 152 is a wire which is bent to construct an circular portion disposed on the outer periphery of the pressure chamber forming member 150 and a linear portion downwardly extending from the circular portion. The linear portion of the cleaning pin 152 extends downwardly through an eyehole 140a provided in the diaphragm 140 and an eyehole 142b provided in the main valve body 142. Penetration of the cleaning pin 152 through each eyehole prevents the eyeholes from being blocked for example by foreign objects which are mixed in the tap water.
The O-ring 154 is disposed around the shaft 148 extending through the pressure chamber forming member 150 to keep the water-tightness of the pressure chamber.

A structure of the pivot mechanism 138 will be described below.
The base member 156 is a plate-like member disposed within the faucet device body 102. The base member 156 is provided with two pressure chamber constructing portions 156a for housing the pressure chamber forming member 150 therein.

The holding plate 158 is a plate-like member disposed on the base member 156. The base member 156 is fixed to the faucet device body 102 by sandwiching the base member 156 between the faucet device body 102 and the holding plate 158 and attaching the holding plate 158 to the faucet device body 102. The holding plate 158 is provided with two circular holes 158a for receiving each pressure chamber constructing portion 156a.

The pivot receiving member 160 is a T-shaped plate-like member disposed on the holding plate 158. As illustrated in FIG. 19, the pivot receiving member 160 is provided with a depression centered on an intersection of the T-shape, and the surface of the depression is composed of three spherical surfaces 160a. These three spherical surfaces 160a form a part of a surface of a single sphere centered on the pivot point. Each spherical surface 160a has a wedge-shaped notch 160b provided in the center thereof. Further, as indicated in dashed line in FIG. 19, magnets 160c for attraction is embedded in each of three end portions of the T-shape. These three magnets 160c keep the pivot member 162 being tilted to each direction by attracting an iron plate embedded in the pivot member 162.

The pivot member holder 164 is an approximately cylindrically-shaped member, and is screwed to the base member 156 by a screw (not shown) penetrating the center thereof through the pivot member 162 and the pivot receiving member 160. As a result, the pivot receiving member 160 is sandwiched between the pivot member holder 164 and the base member 156 to be fixed to the base member 156. The pivot member 162 is engaged with a flange 164a of the pivot member holder 164, and is supported in a pivotally movable manner between the pivot receiving member 160 and the flange 164a.

The water spouting and stopping modes switching operation portion 112 is snap-fitted in and integrated with the pivot member 162.
The operation portion holder 168 is a disk-shaped member having three legs, and is fixed to the water spouting and stopping modes switching operation portion 112 by snap-fit.

A structure of the pivot member 162 will be described below with reference to FIG. 20. FIG. 20(a) is a perspective view illustrating an upper surface, and FIG. 20(b) is a perspective view illustrating a lower surface of the pivot member 162.

As illustrated in FIG. 20, the pivot member 162 is an approximately plate-like member, and is provided with three spherical surfaces 170a in substantially the center thereof. These three spherical surfaces 170a are provided to project from the lower surface of the pivot member 162, and each spherical surface 170a forms a part of a surface of a single sphere centered on a pivot point P. Each spherical surface 170a is provided with a wedge-shaped protrusion 170b at the center thereof. Each spherical surface 170a of the pivot member 162 is formed to be coincident with each spherical surface 160a of the pivot receiving member 160, and each protrusion 170b is formed to be received in each notch 160b of the pivot receiving member 160. As a result, the pivot member 162 is supported by the pivot receiving member 160 in a pivotally movable manner about the pivot point P.

The lower surface of the pivot member 162 is composed of a first plane 172a, a second plane 172b and a third plane 172c which are partitioned by three ridge lines. Thus, when the pivot member 162 is rotated about a first rotational axis A1 that passes through the pivot point P, then the first plane 172a makes surface contact with the upper surface of the pivot receiving member 160. Likewise, when the pivot member 162 is rotated about a second rotational axis A2, then the second plane 172b makes surface contact with the upper surface of the pivot receiving member 160, and when rotated about a third rotational axis A3, then the third plane 172c makes surface contact with the upper surface of the pivot receiving member 160. As used herein, the rotatable (tiltable) movement about a plurality of rotational axes, such as by the pivot member 162 is referred to as a "pivoting movement".

The pivot member 162 is further provided with circular holes 162a, 162b and 162c for attaching a circular iron plate thereto. In each of these three circular holes, circular, iron-made thin plate (not shown) is fitted and fixed. When the pivot member 162 is rotated about the first rotational axis A1 and the first plane 172a is contacted with the pivot receiving member 160, the iron plate fitted in the circular hole 162a is attracted to the magnet 160c embedded in the pivot receiving member 160. This causes the pivot member 162 to be held in a situation where the first plane 172a and the pivot receiving member 160 are in contact with each other. Likewise, when the second plane 172b is contacted with the pivot receiving member 160, the iron plate fitted in the circular hole 162b is attracted, and when the third plane 172c is contacted with the pivot receiving member 160, the iron plate fitted in the circular hole 162c is attracted to hold these states. Thus, in this embodiment, the iron plates attached to the pivot member 162 and the magnets 160c embedded in the pivot receiving member 160 function as a tilting movement holding member for holding the tilted water spouting and stopping modes switching operation portion 112 in that position.

The pivot member 162 is also provided with two shaft fixing portions 162a and 162b each for fixing a respective one of two shafts 148. To these shaft fixing portions, an upper end of the shaft 148 extending from the pilot valve 144 is fixed. An annular groove is provided on the upper end of the shaft 148 (FIG. 18). On the other hand, the shaft stopper 166 (FIG. 18) is a disk-shaped member having a notch, where the shaft stopper 166 is attached to the shaft 148 by fitting the groove of the shaft 148 in the notch. The shaft 148 is attached to the pivot member 162 by attaching the shaft stopper 166 to the shaft 148 with the upper end of the shaft 148 being inserted in the shaft fixing portion of the pivot member 162 (FIG. 17).

In this regard, in a situation where the third plane 172c is in contact with the pivot receiving member 160, the shaft 148 of the push type faucet 136b is descended while the shaft 148 of the push type faucet 136a is ascended, as illustrated in FIG. 17. On the contrary, in a situation where the second plane 172b is in contact with the pivot receiving member 160, the shaft 148 of the push type faucet 136a is descended while the shaft 148 of the push type faucet 136b is ascended. Further, in a situation where the first plane 172a is in contact with the pivot receiving member 160, both shafts 148 are descended. In this way, through the pivoting movement of the pivot member 162, any of the situations where only the shaft 148 of the push type faucet 136a is ascended, where only the shaft 148 of the push type faucet 136b is ascended, and where both shafts 148 are descended is selected.

A fixing mechanism of the water spouting and stopping modes switching operation portion will be described below with reference to FIG. 21. As illustrated in FIG. 21, to the back side of the faucet device body 102, a tilting movement lock member 174 is attached in a manner to be slidable in a horizontal direction. The tilting movement lock member 174 includes a sliding operation portion 174a which is exposed to the outside of the faucet device body 102, and an L-shaped engaging portion 174b extending from the sliding operation portion 174a. On the other hand, the water spouting and stopping modes switching operation portion 112 is formed with a locking recess 112a on a lower portion of its back side, the locking recess 112a being designed to receive the engaging portion 174b.

When the sliding operation portion 174a is slid by a user toward the water spouting and stopping modes switching operation portion 112, the distal end of the horizontally extending engaging portion 174b is inserted in the locking recess 112a of the water spouting and stopping modes switching operation portion 112. In a situation where the engaging portion 174b is inserted in the locking recess 112a, the pivoting movement of the water spouting and stopping modes switching operation portion 112 is locked in a state in which the "stop" marking on the front side is pressed down to prohibit the tilting movement to other directions, and thus the faucet device 100 is kept in the water-stopping state. In this way, locking of the water spouting and stopping modes switching operation portion 112 in the water-stopping state makes it possible to prevent the water spouting from being abruptly started by accidentally pushing the water spouting and stopping modes switching operation portion 112 during, for example, cleaning of the bathroom, or by a children's mischief.

Actions of the push type faucets 136a and 136b will be described below with reference to FIG. 17. The mixed water that has been mixed in the thermo faucet 118 (FIG. 14) and subjected to flow rate adjusting in the flow adjusting valve 120 (FIG. 14) firstly arrives in a water passage 102b (FIG. 17) formed in the faucet device body 102. When the push type faucet 136a is in the valve-open state, the mixed water that has arrived in the water passage 102b flows into a main valve port 102c formed in the faucet device body 102, as indicated by a solid arrow in FIG. 17. The mixed water that has passed through the main valve port 102c of the push type faucet 136a is spouted from the faucet spouting portion 108. On the other hand, the mixed water that has passed through the main valve port of the push type faucet 136b is spouted from the shower spouting portion 110.

A part of the mixed water that has arrived in the water passage 102b also flows through the eyeholes provided in the diaphragm 140 and the main valve body 142 into the pressure chamber residing above the valve element. However, in the push type faucet 136a as shown in FIG. 17, the pilot valve 144 is pulled up by the shaft 148 to open the pilot valve port 142a, causing the mixed water that has flowed into the pressure chamber to flow out through the pilot valve port 142a, so that the pressure in the pressure chamber cannot be increased.

On the other hand, in a situation where the shaft 148 is descended as in the push type faucet 136b as shown in FIG. 17, the pilot valve 144 is pressed against the pilot valve port 142a by the pilot valve spring 146 to close the pilot valve port 142a. In this situation, the mixed water that has flowed into the pressure chamber through the eyeholes of the diaphragm 140 and the main valve body 142 pools in the pressure chamber, so that the pressure in the pressure chamber is increased. This pressure depresses the valve element toward the main valve port to bring the push type faucet in a valve-closed state. It is noted that since the pilot valve 144 is biased by the pilot valve spring 146, when the shaft 148 is being descended, the pilot valve port 142a is maintained in a valve-closed state even if the valve element is descended.

In this way, the pilot valve port 142a is opened and closed by ascent and descent of the corresponding shaft 148, and each push type faucet is opened and closed based on the opening and closing of the pilot valve port 142a.

Actions of the water passage switching device 122 according to the second embodiment of the present invention will be described below. Firstly, in a situation where the "stop" marking on the front side of the water spouting and stopping modes switching operation portion 112 is pressed down, the shafts 148 for both of the push type faucets 136a and 136b are being descended. In this situation, the first plane 172a of the pivot member 162 is in surface contact with the upper surface of the pivot receiving member 160, and attracting force between the iron plate fitted in the circular hole 162a and the magnet 160c maintains this state. Further, in this situation, both push type faucets 136a and 136b are in the valve-closed state to bring the faucet device 100 in the water-stopping state.

Then, when a user pushes near the "faucet" marking in the left rear area of the water spouting and stopping modes switching operation portion 112, the water spouting and stopping modes switching operation portion 112 is pivotally moved with the pivot member 162 to transition to the situation where the third plane 172c is in surface contact with the upper surface of the pivot receiving member 160. This causes the shaft 148 which is attached to the right front side of the pivot member 162 to be ascended to bring the corresponding push type faucet 136a in a valve-open state, so that the mixed water is spouted from the faucet spouting portion 108. In this situation, the iron plate fitted in the circular hole 162c is attracted to the magnet 160c to keep the tilted state of the water spouting and stopping modes switching operation portion 112.

Further, when a user pushes near the "shower" marking in the right rear area of the water spouting and stopping modes switching operation portion 112, the water spouting and stopping modes switching operation portion 112 is pivotally moved to transition to the situation where the second plane 172b is in surface contact with the upper surface of the pivot receiving member 160. This causes the shaft 148 which is attached to the left front side of the pivot member 162 to be ascended, while the shaft 148 on the right front side to be descended. This bring the push type faucet 136b corresponding to the shaft 148 on the left front side in a valve-open state, so that spouting from the shower spouting portion 110 is started. In addition, the push type faucet 136a corresponding to the shaft 148 on the right front side is brought in a valve-closed state, so that spouting from the faucet spouting portion 108 is stopped. In this situation, the iron plate fitted in the circular hole 162b is attracted to the magnet 160c to keep the tilted state of the water spouting and stopping modes switching operation portion 112.

The water-stopping state, the water-spouting state from the faucet spouting portion 108, and the water-spouting state from the shower spouting portion 110 can be mutually directly transitioned between each state based on the user operation.

According to the water passage switching device 122 of the second embodiment of the present invention, the tilted water spouting and stopping modes switching operation portion 112 is held in the tilted position. This makes it possible to allow a user to visually recognize the switched water spouting and stopping mode from the state of the water spouting and stopping modes switching operation portion 112, and thus the operability can be improved. Thus, the water passage switching device 122 of this embodiment comprises a tilting movement lock member 174 for locking a pivoting movement of the water spouting and stopping modes switching operation portion 112. This makes it possible to prevent an unintended water spout at the time of cleaning or caused by children's mischief.

While preferred embodiments of the present invention has been described above, various modifications can be made to the above described embodiment.

### EXPLANATION OF CODES

1. hand shower head according to a first embodiment of the present invention
2. shower head body
2a. water spray portion
2b. gripper portion
2c. opening
4. water spray plate
4a. water spray hole
4b. water spray hole
4c. water spray hole
6. push-button (operation portion of the tilting operation member)
8. water flow passage forming member
8a. connection end
8b. distal end (opening-closing mechanism body)
10. water passage switching device
12. first water spray chamber forming member
12a. first water passage
12b. second water passage
12c. third water passage
14. second water spray chamber forming member
14a. concave portion
14b. through-hole
14c. through-hole
14d. fringe
16. third water spray chamber forming member
18. water spray nozzle forming member
18a. water spray nozzle
18b. water spray nozzle
20. rotary nozzle
20a. spray nozzle hole
22. rotary nozzle supporting member
24. water passage switching device body
24a. guiding portion
24b. circular hole
24c. shaft portion
26a. first valve element
26b. second valve element
26c. third valve element
27a. seating portion
27b. support frame
27c. sliding protrusion
27d. spring attachment portion
27e. inclined plane
28. valve seat forming member
28a, 28b, 28c. valve hole
32. cylindrical support member
34. annular lock member (rotational lock member)
34a. annular portion
34b. stand-out portion
34c. engaging pawl
34d. resetting stand-out portion
34e. cam surface (pushed portion)
34f. cam surface
34g. flange
36a. first cam-constructing member
36b. second cam-constructing member
36c. third cam-constructing member
37a. attaching hole
37b. flange
37c. operation cam
37d. cam surface
37e. distal end surface
37f. vertical surface
38. reset cam-constructing member
40a, 40b, 40c. operation rod (valve actuating rod)
42. operation portion covering member (tilting movement restricting member)
42a. opening
42b. stepped portion
42c. ceiling surface
42d. inner wall surface
42e. vertical surface
42f. raised portion
43. pivot-receiving member
43a. pivot concave portion
44. pivoting member (tilting operation member)
44a. pivoting protrusion (tilting shaft of the tilting operation member)
46. elastic cover member
46a. opening
48a. coil spring (cam biasing means)
48b. coil spring (resetting cam biasing means)
50. torsion spring (lock member biasing means)
52. packing (gasket)
54. coil spring
100. faucet device
102. faucet device body
102a. diaphragm fixing portion
102a. water passage
104. hot water supply pipe
106. cold water supply pipe
108. faucet spouting portion
110. shower spouting portion
112. water spouting and stopping modes switching operation portion (tilting operation member)
112a. locking recess
114. temperature setting knob
116. flow rate setting knob
118. thermo faucet
120. flow adjusting valve
122. water passage switching device according to a second embodiment of the present invention
124. temperature adjusting valve element
126. biasing spring
128. shape memory alloy spring
130. temperature adjusting screw
132. biasing spring holder
134. flow adjusting valve element
136a, 136b. push type faucet
138. pivot mechanism
140. diaphragm
140a. eyehole
142. main valve body
142a. pilot valve port
142b. eyehole
144. pilot valve
146. pilot valve spring
148. shaft (valve actuating rod)
150. pressure chamber forming member
152. cleaning pin
154. O-ring
156. base member
156a. pressure chamber constructing portion
158. holding plate
160. pivot receiving member
160a. spherical surface
160b. notch
160c. magnet
162. pivot member
162a, 162b, 162c. circular hole
162d, 162e. shaft fixing portion
164. pivot member holder
166. shaft stopper
168. operation portion holder
170a. spherical surface
170b. protrusion
172a. first plane
172b. second plane
172c. third plane
174. tilting movement lock member
174a. sliding operation portion
174b. engaging portion

## Claims

1. A water passage switching device capable of switching between at least three water spouting and stopping modes by opening and closing a plurality of valves, comprising:
a plurality of valve elements configured to be moved between a valve-open position and a valve-closed position in response to the each water spouting and stopping mode;
a pivotally movable tilting operation member directly operated by a user to switch between the each water spouting and stopping mode; and
a plurality of valve actuating rods arranged around a pivot point of the tilting operation member, and each adapted to open and close a respective one of the plurality of valve elements based on a tilting movement in each direction of the tilting operation member.

2. The water passage switching device according to claim 1 further comprising tilting movement holding means for, when the tilting operation member is tilted to switch to the each water spouting and stopping mode, holding the tilted tilting operation member at a tilted position.

3. The water passage switching device according to claim 1 or 2, wherein the tilting operation member comprises an operation portion to which operational force is applied by a user, and a tilting shaft extending from the operation portion to the pivot point.

4. The water passage switching device according to any one of claim 1 to 3, wherein the valve elements are moved by movement of the valve actuating rod when the tilting operation member pushes one end of the valve actuating rod, and wherein a contact surface between the tilting operation member and the valve actuating rod is formed in a shape allowing line contact or surface contact therebetween.

5. The water passage switching device according to any one of claims 1 to 3, wherein the valve elements are moved by movement of the valve actuating rod when the tilting operation member pushes one end of the valve actuating rod, and wherein a contact surface of the valve actuating rod in contact with the tilting operation member is formed in a curved surface.

6. The water passage switching device according to claim 4 or 5, wherein the one end of the valve actuating rod pushed by the tilting operation member is expanded in a direction radially-outwardly from the pivot point.

7. The water passage switching device according to any one of claim 1 to 6, further comprising a tilting movement lock member for locking a pivoting movement of the tilting operation member.

8. The water passage switching device according to any one of claims 1 to 7, further comprising a tilting movement restricting member for restricting directions to which the tilting operation member is tilted, and the tilting movement restricting member restricting the directions to a plurality of predetermined directions.

9. A hand shower head capable of switching between water spouting and stopping modes by opening and closing of valves, comprising:
a shower head body equipped with a gripper portion and a water spray portion, the gripper portion being gripped by a user;
a water spray plate provided with a plurality of water spray holes; and
the water passage switching device according to any one of claims 1 to 8 including the tilting operation member disposed in the gripper part.
